(19) Europäisches Patentamt
European Patent Office
Office européen des brevets

(11) EP 4 358 428 A2

(12) # EUROPEAN PATENT APPLICATION

(43) Date of publication:
**24.04.2024 Bulletin 2024/17**

(21) Application number: **23204088.1**

(22) Date of filing: **17.10.2023**

(51) International Patent Classification (IPC):
***H04B 7/0456*** *(2017.01)* ***H04B 7/06*** *(2006.01)*

(52) Cooperative Patent Classification (CPC):
**H04B 7/0626; H04B 7/0478**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **17.10.2022 KR 20220133617**
**10.02.2023 KR 20230018042**

(71) Applicant: **Samsung Electronics Co., Ltd.**
**Suwon-si, Gyeonggi-do 16677 (KR)**

(72) Inventors:
- **LEE, Junho**
  **16677 Suwon-si (KR)**
- **KIM, Jaein**
  **16677 Suwon-si (KR)**
- **OH, Jinwoo**
  **16677 Suwon-si (KR)**
- **YOON, Hongsik**
  **16677 Suwon-si (KR)**

(74) Representative: **Marks & Clerk LLP**
**15 Fetter Lane**
**London EC4A 1BW (GB)**

(54) **WIRELESS COMMUNICATION DEVICE AND METHOD EMPLOYING CHANNEL STATE INFORMATION COMPRESSION**

(57) Provided is an operating method of a wireless communication device, the method including receiving a channel state information reference signal (CSI-RS) from a base station, generating channel information by estimating a channel between the wireless communication device and the base station, based on the CSI-RS, and reporting the channel information to the base station, wherein the generating of the channel information includes generating first compressed data by compressing, in a spatial domain, channel characteristic information of a subband in which the CSI-RS is received, generating second compressed data by compressing the first compressed data in a frequency domain by using a first Discrete Fourier transform (DFT) function having a size corresponding to the number of subbands in which the CSI-RS is received in a bandwidth part (BWP) for communication with the base station, and generating the channel information, based on the second compressed data.

FIG. 4

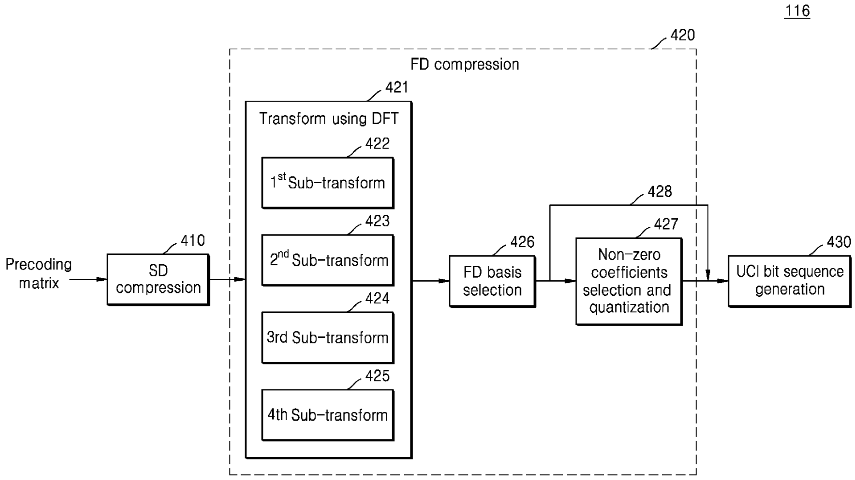


EP 4 358 428 A2

## Description

Technical Field

This disclosure relates to an apparatus that compresses channel state information in a wireless communication system, and an operating method thereof.

Discussion of Related Art

Wireless communication devices compliant with recent Third Generation Partnership Project (3GPP) standards (e.g., Rel.16) may perform communication with a base station using an Enhanced TypeII (eTypeII) codebook to reduce the overhead of channel state information (CSI) feedback. Through use of the eTypeII codebook, overhead reduction may be achieved by feeding back channel information utilizing correlation characteristics between space and frequency of CSI. To this end, the following process may be followed: 1) A base station transmits a channel state information-resource signal (CSI-RS) to a wireless communication device using an antenna port defined in the standard and a time/frequency resource element (RE); and 2) the wireless communication device estimates a multiple-input multiple-output (MIMO) channel between the base station and the wireless communication device from the received CSI-RS signal, and then generates CSI to be reported to the base station. In the CSI generation process of step 2), the wireless communication device determines precoding (or beamforming) at the base station, and transmits to the base station corresponding channel information (e.g., a precoding matrix indicator (PMI)) in a compressed form according to the eTypeII codebook, in consideration of spatial domain/frequency domain characteristics of precoding at the base station.

The channel information compression process advantageously enables the wireless communication device to transmit channel information using fewer wireless communication resources (e.g., time/frequency RE). The spatial domain characteristic of the base station's precoding selects a basis having a dominant value among bases of a spatial domain in which values corresponding to antenna ports are re-expressed in an oversampling Discrete Fourier Transform (DFT) space. The frequency domain characteristic of the precoding at the base station selects a dominant basis among bases of the frequency domain in which values corresponding to the frequencies of the channel information are re-expressed in the DFT space. Only the precoding values for precoding at the base station re-expressed in the small-dimensional (DFT) space determined through the compression process of channel information for selecting space/frequency dimensions as bases of the selected space/frequency domain are reported to the base station.

Therefore, in the process of compressing channel information, compression of the space/frequency domain is performed in consideration of the space/frequency domain characteristics of precoding at the base station, and a wireless communication device that minimizes loss of channel information in the compression process is desired.

SUMMARY

Embodiments of the inventive concept provide a terminal device that reduces overhead of channel state information (CSI) reporting and performs efficient CSI feedback through compression of channel information. The compression may be based on information on a subband in which a channel state information-resource signal (CSI-RS) is received in a wireless communication system when CSI-RS is transmitted in at least some of the subbands of an entire bandwidth part (BWP).

According to an aspect of the inventive concept, there is provided an operating method of a wireless communication device, the method including receiving a channel state information reference signal (CSI-RS) from a base station, generating channel information by estimating a channel between the wireless communication device and the base station based on the CSI-RS, and reporting the channel information to the base station, wherein the generating of the channel information includes generating first compressed data by compressing, in a spatial domain, channel characteristic information of a subband in which the CSI-RS is received, generating second compressed data by compressing the first compressed data in a frequency domain by using a first Discrete Fourier transform (DFT) function having a size corresponding to the number of subbands in which the CSI-RS is received in a bandwidth part (BWP) for communication with the base station, and generating the channel information based on the second compressed data.

According to another aspect of the inventive concept, there is provided an operating method of a wireless communication device, the method including receiving a CSI-RS from a base station, generating channel information by estimating a channel between the wireless communication device and the base station based on the CSI-RS, and reporting the channel information to the base station, wherein the generating of the channel information includes generating first compressed data by compressing, in a spatial domain, channel characteristic information of a subband in which the CSI-RS is received, generating second compressed data by compressing the first compressed data in a frequency domain using a first partial DFT function composed of a column domain corresponding to a subband constituting a BWP for communication with the base station and a row domain corresponding to a subband in which the CSI-RS is received, and generating the channel information based on the second compressed data.

According to another aspect of the inventive concept, there is provided an operating method of a wireless communication device, the method including receiving a CSI-RS from a base station, generating channel information by estimating a channel between the wireless communication device and the base station based on the CSI-RS, and reporting the channel information to the base station, wherein the generating of the channel information includes generating first compressed data by compressing, in a spatial domain, channel characteristic information of a subband in which the CSI-RS is received, performing pre-processing of the first compressed data with respect to a subband in which the CSI-RS is not received among subbands of a BWP for communication with the base station, according to a preset method, generating second compressed data by compressing the pre-processed first compressed data in a frequency domain by using a DFT function having a size corresponding to a number of subbands constituting the BWP, and generating the channel information based on the second compressed data.

According to another aspect of the inventive concept, there is provided an operating method of a wireless communication device, the method comprising: receiving a channel state information reference signal (CSI-RS) from a base station; generating channel information by estimating a channel between the wireless communication device and the base station, based on the CSI-RS; and reporting the channel information to the base station, wherein the generating of the channel information comprises: generating first compressed data by compressing, in a spatial domain, channel characteristic information of a subband in which the CSI-RS is received; generating second compressed data by compressing the first compressed data in a frequency domain; and generating the channel information, based on the second compressed data.

Generating of the second compressed data by compressing the first compressed data in a frequency domain may comprise generating the second compressed data by compressing the first compressed data in a frequency domain using a first Discrete Fourier transform (DFT) function having a size corresponding to a number of subbands in which the CSI-RS is received in a bandwidth part (BWP) for communication with the base station

Generating of the second compressed data may comprise, when bitmap information indicating at least one subband of interest of the base station is received from the base station, compressing the first compressed data in the frequency domain using a second DFT function having a size corresponding to the number of subbands of interest.

When a ratio of the number of subbands constituting the BWP to the number of subbands through which the CSI-RS is received is an integer, the generating of the second compressed data may comprise: generating a third DFT function in the form of an oversampled DFT function by applying at least one of a rotation index and a position indication matrix of the CSI-RS to the first DFT function; and generating the second compressed data by compressing the first compressed data in the frequency domain by using the oversampled DFT function.

The number of rotation indices may be determined based on the ratio of the number of subbands constituting the BWP to the number of subbands through which the CSI-RS is received.

When the ratio of the number of subbands constituting the BWP to the number of subbands through which the CSI-RS is received is an integer, the generating of the channel information may comprise: selecting a frequency domain (FD) basis corresponding to a reception area of the CSI-RS, based on the second compressed data; and mapping the FD basis to correspond to the BWP area.

Mapping of the FD basis may comprise: calculating a value by adding the rotation index to the FD basis which is multiplied by the ratio of the number of subbands constituting the BWP to the number of subbands through which the CSI-RS is received; and mapping the value to a FD basis corresponding to the BWP area.

When the ratio of the number of subbands constituting the BWP to the number of subbands through which the CSI-RS is received is an integer, the generating of the channel information may comprise: selecting non-zero coefficients (NZC), based on a matrix composed of column vectors corresponding to the first compressed data and the FD basis; and mapping the NZC to correspond to the BWP area.

The selecting of the NZC may comprise selecting the NZC, based on absolute values of elements included in a matrix composed of a column vector corresponding to the first compressed data and the FD basis.

When the ratio of the number of subbands constituting the BWP to the number of subbands through which the CSI-RS is received is not an integer, the generating of the second compressed data may comprise: generating a fourth DFT function by applying a position indication matrix of the CSI-RS to the first DFT function; and generating the second compressed data by compressing the first compressed data in the frequency domain using the fourth DFT function.

Generating of the second compressed data by compressing the first compressed data in a frequency domain may comprise compressing the first compressed data in a frequency domain using a first partial Discrete Fourier transform (DFT) function composed of a column domain corresponding to a subband constituting a bandwidth part (BWP) for communication with the base station and a row domain corresponding to a subband in which the CSI-RS is received.

The generating of the second compressed data may comprise, when bitmap information indicating a subband of interest of the base station is received from the base station, compressing the first compressed data in the frequency domain using a second partial DFT function composed of a column domain corresponding to an area of the subband constituting the BWP and a row domain corresponding to the subband of interest.

At least some of the above and other features of the invention are set out in the claims.

## BRIEF DESCRIPTION OF THE DRAWINGS

Embodiments will be more clearly understood from the following detailed description taken in conjunction with the accompanying drawings in which:

FIG. 1 illustrates an example of a wireless communication system according to an example embodiment;
FIG. 2 is a block diagram illustrating a wireless communication device according to an example embodiment;
FIG. 3 is a block diagram for explaining a certain implementation example of a first radio frequency integrated circuit (RFIC) and a first antenna module of FIG. 2;
FIG. 4 is a block diagram of a channel information compression circuit according to an example embodiment;
FIG. 5 is a flowchart illustrating an operating method of a wireless communication device according to an example embodiment;
FIGS. 6A and 6B are diagrams for explaining a frequency domain (FD) compression operation by a first sub-transform block of FIG. 4 according to example embodiments;
FIG. 7 is a flowchart illustrating an operating method of a wireless communication device according to an example embodiment;
FIGS. 8A, 8B, 8C, 8D and 8E are diagrams for explaining an FD compression operation by a second sub-transform block of FIG. 4 according to example embodiments;
FIG. 9 is a flowchart illustrating an operating method of a wireless communication device according to an example embodiment;
FIGS. 10A, 10B, 10C and 10D are diagrams for explaining an FD compression operation by a third sub-transform block of FIG. 4 according to example embodiments;
FIG. 11 is a flowchart illustrating an operating method of a wireless communication device according to an example embodiment;
FIGS. 12A, 12B, 12C, 12D, 12E, 12F and 12G are diagrams for explaining an FD compression operation by a fourth sub-transform block of FIG. 4 according to example embodiments; and
FIG. 13 is a block diagram illustrating an electronic device according to an example embodiment.

## DETAILED DESCRIPTION OF EMBODIMENTS

Hereinafter, embodiments will be described in detail with reference to the accompanying drawings.

For convenience of description, this description partially uses terms and names defined in the 3rd Generation Partnership Project Long Term Evolution (3GPP LTE) standard or New Radio (NR) standard. However, the inventive concept is not limited by the above terms and names, and may be equally applied to systems conforming to other standards.

Herein, the word "index" may be understood to mean "index value" (as opposed to a list of values) as is customary in modern wireless communication standards.

Herein, the word "FD column index" may be understood to mean "FD basis (e.g., FD basis index)" or "FD column vector".

Examples of an entity that communicates with a wireless communication device according to an embodiment and allocates communication network resources to the wireless communication device include a cell, a base station (BS), a NodeB (NB), an eNodB (eNB), a next generation radio access network (NG RAN), a radio access unit, a base station controller, a node on the network, and a gnodeB (gNB).

A wireless communication device is an entity that communicates with a base station or other wireless communication device, examples of which include a node, a user equipment (LTE), a next generation LTE (NG LTE), a mobile station (MS), a mobile equipment (ME), a device, and a terminal.

Other examples of wireless communication devices may include at least one of smart phones, tablet personal computers (PCs), mobile phones, video phones, e-book readers, desktop PCs, laptop PCs, netbook computers, personal digital assistants (PDAs), portable multimedia players (PMPs), MP3 players, medical devices, cameras, and wearable devices. In addition, wireless communication devices may include at least one of televisions, digital video disk (DVD) players, audio devices, refrigerators, air conditioners, vacuum cleaners, ovens, microwave ovens, washing machines, air purifiers, set-top boxes, home automation control panels, security control panels, media boxes (e.g. Samsung HomeSync™, Apple TV™, and Google TV™), game consoles (e.g. Xbox™, and PlayStation™), electronic dictionaries, electronic keys, camcorders, and electronic photo frames. Further examples of wireless communication devices may include at least one of various medical devices (e.g., various portable medical measuring devices, such as blood glucose monitors, heart rate monitors, blood pressure monitors, or body temperature monitors, magnetic resonance angiography (MRA), magnetic resonance imaging (MRI), computed tomography (CT), imaging devices, or sonicator, etc.), a navigation device, a global navigation satellite system (GNSS), an event data recorder (EDR), a flight data recorder (FDR), an automotive infotainment device, marine electronic equipment (e.g. a marine navigation system, a gyrocompass, etc.), avionics, security equipment, a vehicle head unit, industrial or domestic robots, drones, an automated teller machine (ATM) at a financial institution, a point of sale (POS) at a store, and Internet of things (IoT) devices (e.g., light bulbs, various sensors, sprinkler devices, fire alarms, thermostats, street lights, toasters, exercise equipment, hot water tanks, heaters, boilers, etc.) Other examples may include various types of multi-media systems capable of performing communication functions.

Hereinafter, embodiments will be described in detail with reference to the accompanying drawings.

FIG. 1 is a block diagram illustrating a wireless communication system according to an embodiment.

Referring to FIG. 1, a wireless communication system 10 may include a base station 200 and a wireless communication device 100. The wireless communication system 10 is shown as including only one base station 200 and one wireless communication device 100, but this is merely an example for simplicity of explanation; the wireless communication system 10 may be implemented to include various numbers of base stations and wireless communication devices.

The base station 200 may be connected to the wireless communication device 100 through a radio channel to provide various communication services. The base station 200 may provide services through a shared channel for all user traffic, and perform scheduling by collecting status information such as the buffer status, available transmission power status, and channel status of the wireless communication device 100. The wireless communication system 10 may support a beamforming technology using orthogonal frequency division multiplexing (OFDM) as a radio access technology. In addition, the wireless communication system 10 may support an adaptive modulation & coding (AMC) method for determining a modulation scheme and a channel coding rate according to the channel condition of the wireless communication device 100.

The wireless communication system 10 may transmit and receive signals using a wide frequency band existing in a frequency band of 6 GHz or higher. For example, the wireless communication system 10 may achieve a high data transmission rate by using a millimeter wave band such as a 28 GHz band or a 60 GHz band. Now, since the millimeter wave band has a relatively large signal attenuation per distance, the wireless communication system 10 may support transmission and reception based on a directional beam generated using multiple antennas to secure coverage. The wireless communication system 10 may be a system supporting multiple input, multiple output (MIMO), and thus the base station 200 and the wireless communication device 100 may support beamforming technology. Beamforming technology may be classified into digital beamforming, analog beamforming, and hybrid beamforming. Hereinafter, the present technology will be described in the wireless communication system based on an embodiment supporting the hybrid beamforming technology, but it will be fully understood that the present technology may be applied to other beamforming technologies.

As shown in FIG. 1, the base station 200 may transmit a channel state information-reference signal (CSI-RS) to the wireless communication device 100. The wireless communication device 100 may estimate a downlink channel using the CSI-RS.

The wireless communication device 100 may utilize CSI compression technology (e.g., spatial domain/frequency domain compression technology) to accurately transmit channel state information to the base station using reduced uplink resources. As an example, the wireless communication device 100 may generate first compressed data through spatial domain compression based on a subband in which CSI-RS is received, and generate second compressed data by performing frequency domain compression using various Discrete Fourier Transform (DFT) functions on the first compressed data. The wireless communication device 100 may transmit channel information (e.g., CSI report) generated based on the second compressed data to the base station 200.

The inventive concept involves a method for improving / maximizing compression performance of channel information by reporting channel information through a frequency domain compression technique based on various DFT functions, as will be detailed below.

FIG. 2 is a block diagram illustrating a block diagram of a wireless communication device 100 according to an example embodiment. The components may be part of a modem chip of the wireless communication device 100.

The wireless communication device 100 may include a baseband processor 110, a first RF integrated circuit (RFIC) 120, first to ith antenna modules 130_1 to 130_i (i = two or more), a second RFIC 140, a plurality of antennas 150, and a memory 160.

The baseband processor 110 may control overall operations of the wireless communication device 100. For example, the baseband processor 110 may include a channel quality measurement circuit 112, a switching control circuit 114, and a channel state information (CSI) compression circuit 116.

The channel quality measurement circuit 112, the switching control circuit 114, and the CSI compression circuit 116 may be implemented as hardware or through use of software. Operations of the channel quality measurement circuit 112, the switching control circuit 114, and the CSI compression circuit 116 to be described below may be understood as operations of the baseband processor 110.

When communicating with the base station 200 or other devices, to identify whether a channel of a primary component carrier among a plurality of component carriers is degraded, the channel quality measurement circuit 112 may measure the channel quality of the first to ith antenna modules 130_1 to 130_i.

The channel quality measurement circuit 112 may measure conditions of a channel receiving a signal through each of the first to ith antenna modules 130_1 to 130_i, and generate indicators indicating channel conditions for each of a plurality of component carriers corresponding to the first to ith antenna modules 130_1 to 130_i based on the measured channel conditions.

For example, the channel quality measurement circuit 112 may measure at least one of a rank indicator (RI), a channel quality indicator (CQI), a reference signal received power (RSRP), a reference signal received quality (RSRQ), a signal to interference plus noise ratio (SINR), a received signal strength indicator (RSSI), a reference signal related correlation, and a variable gain index of received signals.

The switching control circuit 114 may control the connection between the first through ith antenna modules 130_1 through 130_i and the first RFIC 120 based on the layer allocation information received to perform communication with the base station 200 device or other devices. The first RFIC 120 may include first to kth RF chains 121_1 to 121_k corresponding to RF resources. Each of the first to ith antenna modules (sets of antenna-associated circuitry) 130_1 to 130_i may include first to mth antenna arrays 130_11 to 130_1m. Each of the first to mth antenna arrays 130_11 to 130_1m may include first to nth RF front-ends 131_11 to 131_1n and first to nth antennas 132_11 to 132_1n. According to the layer assignment information received from the base station 200 device, the switching control circuit 114 may control the connection between the first to kth RF chains 121_1 to 121_k and the first to mth antenna arrays 130_11 to 130_1m in the first to ith antenna modules 130_1 to 130_i.

The switching control circuit 114 may control a connection between the selected antenna module and the first RFIC 120 based on the layer assignment information received from the base station 200 device. For example, the switching control circuit 114 may disconnect the selected antenna module from the first RFIC 120 based on the layer assignment information received from the base station 200 device, and perform an antenna module switching operation by controlling a connection between another antenna module and the first RFIC 120.

For example, the first RFIC 140 may support communication in a millimeter wave band, and the second RFIC 140 may support communication in a frequency band lower than the millimeter wave band. The second RFIC 140 may be selectively connected to the plurality of antennas 150.

The CSI compression circuit 116 may perform spatial domain compression and frequency domain compression based on the reference signal (e.g., CSI-RS) received from the base station 200, and generate channel information for channel information reporting (e.g., cell specific reference (CSR)-resource signal (RS) reporting). The generated channel information may be stored in an uplink control information (UCI) bit sequence and reported to the base station 200.

The memory 160 may store indicators of the first to ith antenna modules 130_1 to 130_i. The memory 160 may store information required for connection control between the first RFIC 140 and the first to ith antenna modules 130_1 to 130_i. In some embodiments, the channel quality measurement circuit 112 and the switching control circuit 114 may be implemented as software and stored in the memory 160 in code form. Switching history information may also be stored in the memory 160.

For example, the memory 160 may be implemented with volatile memory such as static random access memory (SRAM). In some embodiments, memory 160 may be implemented as volatile memory, such as Dynamic Random Access Memory (DRAM), or a non-volatile memory, such as ROM, flash memory, Resistive Random Access Memory (ReRAM), or Magnetic Random Access Memory (MRAM).

FIG. 3 is a block diagram for explaining a certain implementation example of the first RFIC and the first antenna module of FIG. 2.

In detail, in FIG. 3, as a first RFIC and a first antenna module of the wireless communication device 100, the wireless communication device 100 of FIG. 2 reports (or transmits) channel information compressed in the spatial domain/frequency domain by the CSI compression circuit 116 to the base station through the first RFIC 120a and the first antenna module 130_1a.

Referring to FIG. 3, a first RFIC 120a of the wireless communication device 100 of FIG. 1 may include first to kth RF chains 121_1a to 121_ka and a switch interface 122a. The implementation example of the first antenna module 130_1a described in FIG. 3 may also be applied to the second to ith antenna modules 130_2 to 130_i of FIG. 2. For example, in the initial stage of access between the base station 200 and the wireless communication device 100 in a wireless communication system, connection between the first to kth RF chains 121_1a to 121_ka and the first antenna module 130_1a may be controlled based on the layer assignment information set by the base station 200.

For example, when the channel state of a major component carrier is deteriorated in a wireless communication system, the switch interface 122a may control the connection between the first to kth RF chains 121_1a to 121_ka and the first antenna module 130_1a based on the changed layer assignment information received from the base station 200.

Each of the first to kth RF chains 121_1a to 121_ka may include an analog-to-digital converter ADC, a mixer MX, and a variable gain amplifier VGA. The variable gain amplifier VGA may amplify the received signal based on a variable gain, the mixer MX may frequency downconvert the amplified signal based on the frequency signal LO, and the analog-to-digital converter ADC may convert the converted signal into a digital signal. A digital signal output from the analog-to-digital converter ADC may be provided to the baseband processor 110 of FIG. 2.

The analog-to-digital converter ADC, the mixer MX, and the variable gain amplifier VGA form a path for a signal received by the wireless communication device 100, and the first to kth RF chains 121_1a to 121_ka of FIG. 3 may further include components forming a path of a signal transmitted by the wireless communication device 100. The switch interface 122a may connect the first to kth RF chains 121_1a to 121_ka and the first antenna module 130_1a in response to a switch control signal.

The first antenna module 130_1a may include first to mth antenna arrays 130_11a to 130_1ma and first to mth combiners 133_1a to 133_ma. The implementation example of the first antenna array 130_1 1a may be applied to the second to mth antenna arrays 130_12a to 130_1ma. Each of the first to mth antenna arrays 130_1 1a to 130_1ma may include first to nth RF front-ends 131_11a to 131_1na and first to mth antennas 132_11a to 132_ma connected thereto. Each of the first to nth RF front-ends 131_1a to 131_1na may include a phase shifter PS and a low noise amplifier LNA. A plurality of reception beam patterns may be formed in the first antenna module 130_1a through phase adjustment of the plurality of phase shifters PS included in the first antenna module 130_1a. The first to mth combiners 133_1a may combine signals received from the connected first to mth antenna arrays 130_1 1a to 130_1ma and output the summed signals to the first RFIC 120a.

The implementation of the first RFIC 120a and the first antenna module 130_1a of FIG. 3 is merely an example embodiment, but is not limited thereto, and various implementations suitable for communication in the millimeter wave band will be applicable.

FIG. 4 is a block diagram of a channel state information compression circuit according to an example embodiment. The block diagram illustrates a spatial domain compression process and a frequency domain compression process of the baseband processor 110 (particularly, the CSI compression circuit 116 of FIG. 2).

As shown in FIG. 4, the CSI compression circuit 116 may include a spatial domain (SD) compression block 410, a frequency domain (FD) compression block 420 (including a non-zero coefficients (NZC) selection and quantization block 427), and an uplink channel information (UCI) bit sequence generation block 430.

Based on the received CSI-RS, the SD compression block 410 may perform spatial domain compression by utilizing a spatial codebook according to spatial domain characteristics of a subband in which the CSI-RS is received. For example, the SD compression block 410 may re-express values corresponding to the antenna ports of the base station in an oversampled Discrete Fourier Transform (DFT) space (interchangeably, "oversampling DFT space"), and then select an SD basis having a dominant value among candidate bases (e.g., column vectors).

The FD compression block 420 may include a DFT transform block 421, an FD basis selection block 426, the NZC selection and quantization block 427, and a bypass path 428. (Note that the bypass path 428 may be used when the ratio of the number of subbands constituting BWP, $N_{\mathrm{SB}}^{\mathrm{BWP}}$, to the number, $N_{\mathrm{SB}}^{\mathrm{CSIRS}}$, of subbands in which the CSI-RS is received, is an integer).

The DFT transform block 421 may include a first sub-transform block 422, a second sub-transform block 423, a third sub-transform block 424, and a fourth sub-transform block 425. When CSI-RS is received in some subbands of the entire BWP for communication between the base station and the wireless communication device, the DFT transform block 421 according to an embodiment may perform frequency domain compression using any one of the first sub-transform block 422, the second sub-transform block 423, the third sub-transform block 424, or the fourth sub-transform block 425. When the CSI-RS is received over the entire BWP, although not shown in FIG. 4, frequency domain compression may be performed using a DFT function corresponding to the entire BWP size (e.g., a DFT function defined in 3GPP Rel. 16 or 17).

In one embodiment, the matrix corresponding to the nth subband of the SD-compressed first compressed data is defined as $\mathbf{V}_n \in C^{L\times Rank}$, and here, L may refer to the number of dimensions reduced by SD compression, and Rank may refer to the total number of layers for MIMO communication between the base station and the terminal.

In one embodiment, the input matrix $\mathbf{V}_l^{CSIRS}$ of the DFT transformation may be in the $L \times N_{SB}^{CSIRS}$ form of a matrix generated by extracting the 1 st layer of each subband in which the CSI-RS is received from the SD-compressed first compressed data. $\mathbf{V}_l^{CSIRS}$ may be expressed based on Equation 1. Here L may refer to the number of dimensions reduced by SD compression.

[Equation 1]

$$\mathbf{V}_l^{CSIRS} = \left[\mathbf{V}_{N_{SB_start}^{CSIRS}}(:,l), \mathbf{V}_{N_{SBstart}^{CSIRS}+1}(:,l), \ldots, \mathbf{V}_{N_{SB}^{CSIRS}-1}(:,l)\right]$$

In one embodiment, the first sub-transform block 422 may generate second compressed data by compressing the first compressed data in the frequency domain using a DFT function having a size corresponding to the number of subbands in which the CSI-RS is received. A detailed description of this will be described later with reference to FIGS. 5 to 6B. The second sub-transform block 423 may generate second compressed data by compressing the first compressed data in the frequency domain using a DFT function oversampled by the number of subbands in which the CSI-RS is received. A detailed description of this will be described later with reference to FIGS. 7 to 8E. The third sub-transform block 424 may generate second compressed data by compressing the first compressed data in the frequency domain using a partial DFT function of a form determined based on the number of subbands constituting the BWP and the number of subbands in which the CSI-RS is received. A detailed description of this will be described later with reference to FIGS. 9 to 10D. The fourth sub-transform block 425 may perform pre-processing on the subbands to which the CSI-RS is not received among the subbands constituting the BWP, and generate second compressed data by compressing the preprocessed first compressed data in the frequency domain using the DFT function. A detailed description of this will be described later in FIGS. 11 to 12G.

The FD basis selection block 426 may receive the second compressed data from the DFT transform block 421 and select a dominant basis of the second compressed data as the FD basis. Here, the FD basis may refer to an index of a column having a dominant value among the first compressed data re-expressed in the DFT space. For example, the FD basis selection block 426 may calculate the average values of the squares of components for each column of the second compressed data on which FD compression is performed, sort the average values according to size, and then select and output a preset number of FD basis (e.g., order in which the magnitude of the average value of the square of each column component is large).

The NZC selection and quantization block 427 may calculate the absolute values of the components included in the second compressed data in the form of 'SD basis × FD basis', sorts the absolute values according to size, and then select a preset number of NZCs (e.g., select an order with a large absolute value). The NZC selection and quantization block 427 may quantize the selected FD basis and NZC into a form that may be represented in a UCI bit sequence.

However, the UCI bit sequence generation block 430 may receive the quantized FD basis and NZC from the NZC selection and quantization block 427 and generate a UCI bit sequence for CSI reporting to the base station.

According to an embodiment, when CSI-RS of BWP is transmitted from a base station through some subbands, it is possible to provide a wireless communication device in which compression performance of channel information is maximized by efficiently performing frequency domain compression within a range in which channel information of a subband in which CSI-RS is transmitted is not damaged.

Through a process of compressing channel information in the frequency domain according to the technical idea of the inventive concept, it is possible to provide a wireless communication device capable of preventing deformation and contamination (or distortion) of CSI report contents due to interference between channels.

FIG. 5 is a flowchart illustrating a method of operating a wireless communication device according to an example embodiment.

In detail, FIG. 5 is a diagram for explaining an operation of performing CSI-RS dimension FD compression on channel characteristic information by the baseband processor 110 (e.g., the first sub-transform block 422 of FIG. 4) when the CSI-RS is received in some subbands of the entire BWP in the baseband processor 110 of the wireless communication device 100 of FIG. 2.

Herein, the "CSI-RS dimension" may refer to a DFT space converted based on the number $N_{SB}^{CSIRS}$ of some subbands (less than all the subbands of a BWP) in which the CSI-RS is received among the subbands of the BWP, and the "BWP dimension" may refer to a DFT space converted based on the number $N_{SB}^{BWP}$ of subbands included in the BWP.

Referring to FIG. 5 , an operation of generating channel information by compressing channel characteristic information in the spatial domain and in the frequency domain may include operations S10, S20, S30, S40, S50, S60, and S70.

In operation S10, the baseband processor 110 may receive the CSI-RS from the base station. For example, the base station transmits the CSI-RS to the terminal using a predefined antenna port and a radio communication resource (e.g., a time/frequency resource element (RE)).

In operation S20, the baseband processor 110 may determine (or identify) whether or not the CSI-RS is received through "some subbands" of the BWP (less than all subbands of the BWP), or whether the CSI-RS is transmitted in all the subbands of the BWP and one or more subbands of interest are designated by the base station. Since the CSI-RS may be freely allocated within the BWP by the base station, the CSI-RS may be transmitted either in all subbands of the BWP, or only in some subbands in the BWP. Herein, when the CSI-RS is said to be received in "some subbands" within the BWP, this may encompass 1) the case in which the CSI-RS is received in less than all of the subbands within the BWP, and 2) the case in the CSI-RS is transmitted by the base station over the entire BWP, but the base station designates at least one subband of interest through CSI-reporting band information (e.g., bit sequence) and requests CSI-reporting only for the corresponding at least one subband.

The baseband processor 110 may perform operation S30 when the CSI-RS is received through some subbands of the BWP. When the CSI-RS is received through all subbands of the BWP, in operation S40, the baseband processor 110 may generate channel information by estimating a channel based on the CSI-RS.

In operation S30, the baseband processor 110 may compress the channel characteristic information of the subband in which the CSI-RS is received in the spatial domain (hereinafter, referred to as SD compression) to generate first compressed data. For example, the baseband processor 110 re-expresses the spatial domain characteristics (e.g., values corresponding to antenna ports) of the subband in which the CSI-RS is received as an oversample Discrete Fourier Transform (DFT) space, and then selects the dominant SD basis among the SD bases. Here the channel characteristic information of a subband in which the CSI-RS is received may be understood to mean "the spatial domain characteristics of the subband in which the CSI-RS is received (e.g., dominant SD basis)". The baseband processor 110 may generate first compressed data composed of selected SD basis instead of basis constituting existing BWP. That is, the first compressed data may be configured in the form of a matrix having dimensions reduced by the selected SD basis compared to before compression.

In operation S50, the baseband processor 110 may generate second compressed data using a DFT function having a size corresponding to the number of subbands in which the CSI-RS is received. That is, the baseband processor 110 may generate second compressed data by compressing the first compressed data in a frequency domain using the DFT function (hereinafter, referred to as FD compression). For example, the baseband processor 110 may select an FD basis indicating an index of a column having a dominant value among second compressed data obtained by re-expressing the first compressed data in the DFT space. In addition, the baseband processor 110 may calculate absolute values of components included in the second compressed data (e.g., matrix form data) in the DFT transformation space, and select a preset number of NZCs according to the size of the absolute values. The baseband processor 110 may quantize channel information including the selected FD basis and NZC to display the channel information in the UCI bit sequence. A detailed description of this will be described later with reference to FIGS. 6A and 6B.

In operation S60, the baseband processor 110 may generate channel information based on the second compressed data. For example, the baseband processor 110 may generate a UCI bit sequence based on quantized channel information (e.g., information on the selected FD basis and NZC).

In operation S70, the baseband processor 110 may report channel information to the base station. The base station may determine a precoder for downlink data transmission by receiving a report of spatial domain/frequency domain compressed channel information of the wireless communication device. Additionally, in an embodiment according to the inventive concept, the base station may perform CSI-RS configuration and CSI configuration again based on the channel information report of the wireless communication device. The base station may know the amount of information of a corresponding channel based on the spatial domain/frequency domain compressed channel information report of the wireless communication device. The information amount of the channel may be determined based on the energy distribution of NZCs corresponding to the reported FD basis. For example, if the energy of NZCs is concentrated on some FD basis, the base station may control the wireless communication device to increase the compression rate of channel information to minimize the amount of overhead generated by CSI reporting.

Therefore, the wireless communication system according to an embodiment, by adjusting the size of the CSI-RS allocation area according to the amount of channel information by the base station so that there is an effect of increasing spectral efficiency by transmitting data only for a certain wireless communication resource. In addition, the wireless communication device according to the technical concept of the inventive concept may prevent deformation and distortion of CSI report content due to interference through a compression process in the frequency domain (FD).

FIGS. 6A and 6B are diagrams for explaining an FD compression operation by a first sub-transform block according to example embodiments.

In detail, FIGS. 6A and 6B show diagrams for explaining an FD compression operation by the first sub-transform block 422 of FIG. 4.

FIG. 6A shows a case in which CSI-RS is received in some subbands within BWP as a first case in operation S20 of FIG. 5, and FIG. 6B shows a case in which CSI-reporting band information (e.g., a bit sequence) is requested by the base station for CSI-reporting only for a subband of interest as a second case in operation S20 of FIG. 5.

As noted above, the "CSI-RS dimension" may refer to a DFT space converted based on the number, $N_{\mathrm{SB}}^{\mathrm{CSIRS}}$ , of some subbands in which the CSI-RS is received among BWPs, and the "BWP dimension" may refer to a DFT space converted based on the number, $N_{\mathrm{SB}}^{\mathrm{BWP}}$ , of subbands included in the BWP.

In FIGS. 6A and 6B, the baseband processor 110 uses a DFT function set to correspond to the number of subbands in which the CSI-RS is received (e.g., a DFT function in the "CSI-RS dimension", defined earlier) for the size (e.g., K-point) of the DFT transformation to generate second compressed data.

Referring to FIG. 6A, in the first case, the BWP 610 for communication between the base station and the wireless communication device 100 includes the first subband $SB_1$ to the nth subband $SB_{N_{\mathrm{SB}}^{\mathrm{BWP}}}$ including subbands 620 in which the CSI-RS is received.

In one embodiment, in the first case, the baseband processor 110 (e.g., the CSI compression circuit 116) compresses the first compressed data in the frequency domain (hereinafter, referred to as FD compression) to generate second compressed data $\widetilde{\mathbf{V}}_l^{CSIRS}$ (at this time, FD compression may be performed for each layer in the first compressed data) using a DFT function $\mathbf{D}_f^{N_{SB}^{CSIRS}}$ (e.g., a DFT function in the CSI-RS dimension) having a size corresponding to the number of subbands in which the CSI-RS is received. For example, the second compressed data $\widetilde{\mathbf{V}}_l^{CSIRS}$ may be calculated based on Equation 2.

[Equation 2]

$$\widetilde{\mathbf{V}}_l^{CSIRS} = \mathbf{V}_l^{CSIRS}\mathbf{D}_f^{N_{SB}^{CSIRS}}$$

Here, $\mathbf{V}_l^{CSIRS}$ is an input matrix of DFT transformation, which is determined based on Equation 1 in FIG. 4, $\mathbf{D}_f^{N_{SB}^{CSIRS}}$ may refer to a $N_{SB}^{CSIRS}$ -point DFT matrix of $N_{SB}^{CSIRS} \times N_{SB}^{CSIRS}$ size, and $N_{SB}^{CSIRS}$ may refer to the number of subbands in which CSI-RS is received.

Referring to FIG. 6B , in the second case, the BWP 610 includes the first subband $SB_1$ to the nth subband $SB_{N_{\mathrm{SB}}^{\mathrm{BWP}}}$ including the subband 620 in which the CSI-RS is received. For example, the base station may indicate the subband 651 of interest as '1' (active), and transmit a bit sequence (e.g., CSI-reporting band information) in which the non-interest subband 652 is indicated as '0' (inactive) to the wireless communication device 100.

In the second case, when there is a non-interest subband among the subbands in which the CSI-RS is received, the baseband processor 110 (e.g., the CSI compression circuit 116) may determine the DFT size for FD compression as ' $N_{SB_active}^{CSIRS} = N_{SB}^{CSIRS} - N_{SB_inactive}^{CSIRS}$ '. In this case, the baseband processor 110 may also generate the second compressed data $\widetilde{\mathbf{V}}_l^{CSIRS_active}$ based on Equation 3 below (at this time, FD compression may be performed for each layer in the first compressed data).

[Equation 3]

$$\widetilde{\mathbf{V}}_l^{CSIRS_active} = \mathbf{V}_l^{CSIRS_active}\mathbf{D}_f^{N_{SB_active}^{CSIRS}}$$

Here, $\mathbf{V}_l^{CSIRS_active}$ is an input matrix of the DFT transform for the subbands of interest and is determined based on Equation 1 of FIG. 4, and $\mathbf{D}_f^{N_{SB_active}^{CSIRS}}$ may refer to a DFT function (e.g., a CSI-RS dimension DFT function) set to a size corresponding to $N_{SB_active}^{CSIRS}$.

After FD compression, the baseband processor 110 may calculate and sort the norm of each column of the second compressed data to determine (or select) an index of a column having a dominant value on an FD basis.

FIG. 7 is a flowchart illustrating a method of operating a wireless communication device according to an example embodiment.

In detail, FIG. 7 is a diagram for explaining an operation of performing FD compression by mapping to BWP-dimensional FD compression after performing CSI-RS dimension FD compression (e.g., applying oversampled DFT) by the baseband processor 110 (e.g., the second sub-transform block 423 of FIG. 4), an operation of performing FD compression by mapping to BWP-dimensional FD compression when the CSI-RS is received in some subbands of the entire BWP in the baseband processor 110 of the wireless communication device 100 of FIG. 2.

Referring to FIG. 7, an operation of performing FD compression by mapping to a BWP dimension (defined earlier) after performing CSI-RS dimension FD compression may include operations S51, S53, and S55. It is reiterated here that herein, the CSI-RS dimension may refer to a DFT space converted based on the number $N_{\mathrm{SB}}^{\mathrm{CSIRS}}$ of some subbands in which the CSI-RS is received among BWPs, and the BWP dimension may refer to a DFT space converted based on the number $N_{\mathrm{SB}}^{\mathrm{BWP}}$ of subbands included in the BWP.

In operation S51, the baseband processor 110 may determine(or identify) whether the ratio Z of the number of subbands constituting BWP $N_{\mathrm{SB}}^{\mathrm{BWP}}$ to the number of subbands $N_{\mathrm{SB}}^{\mathrm{CSIRS}}$ in which the CSI-RS is received, is an integer. Here, Z may refer to '$N_{SB}^{BWP}/N_{SB}^{CSIRS}$'. For example, when the number of subbands constituting the BWP is '6' and the number of subbands through which the CSI-RS is received is '2', Z is '3', which is an integer. For example, when the number of subbands constituting the BWP is '7' and the number of subbands through which the CSI-RS is received is '2', Z is '3.5', which is not an integer.

In operation S53, the baseband processor 110 may generate second compressed data of the CSI-RS dimension by using an oversampled DFT function (interchangeably, "oversampling DFT function") which it may generate. An oversampling factor may be 'Z($N_{SB}^{BWP}/N_{SB}^{CSIRS}$)'. For example, the baseband processor 110 may generate the oversampled DFT function (e.g., a CSI-RS dimension DFT function) by applying at least one of a rotation index or a position indication matrix of CSI-RS. The baseband processor 110 may generate second compressed data by compressing the first compressed data in the frequency domain using the oversampled DFT function. A detailed description of this will be described later with reference to FIGS. 8A to 8E.

In operation S55, the baseband processor 110 may generate channel information by mapping the second compressed data of the CSI-RS dimension to the BWP dimension.

After applying the oversampled DFT, the baseband processor 110 may select the FD basis and NZC based on the FD basis and NZC selection method described above in FIG. 4.

The baseband processor 110 may map the FD basis selected in the CSI-RS dimension to the FD basis in the BWP dimension by multiplying the FD basis selected in the CSI-RS dimension by the ratio Z, or the baseband processor 110 may map the FD basis selected in the CSI-RS dimension to the FD basis in the BWP dimension by adding the rotation index to the value obtained by multiplying the FD basis selected in the CSI-RS dimension by the ratio Z.

When the ratio of the number of subbands constituting the BWP to the number of subbands through which the CSI-RS is received is an integer, the baseband processor 110 may generate the channel information using a method which further comprises: the baseband processor 110 selecting a FD basis (e.g., FD column index) corresponding to a reception area of the CSI-RS, based on the second compressed data; and mapping the FD basis (e.g., FD column index) to correspond to the BWP area. The baseband processor 110 may calculate a value by adding the rotation index to the FD basis(e.g., FD column index) which is multiplied by the ratio of the number of subbands constituting the BWP to the number of subbands through which the CSI-RS is received, and map the value to a FD basis (e.g., FD column index) corresponding to the BWP area. Here the term "FD column index" may be understood to mean "FD basis(e,g,. FD basis index)".

When the ratio of the number of subbands constituting the BWP to the number of subbands through which the CSI-RS is received is an integer, the baseband processor 110 may generate the channel information using a method which further comprises: the baseband processor 110 selecting non-zero coefficients (NZC), based on a matrix composed of column vectors corresponding to the first compressed data and the FD basis (e.g., FD column index); and mapping the NZC to correspond to the BWP area. Here the selecting of the NZC may comprise: the baseband processor 110 selecting the NZC, based on absolute values of elements included in a matrix composed of a column vector corresponding to the first compressed data and the FD basis (e.g., FD column index). Here the word "FD column index" may be understood to mean "FD basis (e.g.,. FD basis index)".

The baseband processor 110 may perform phase compensation on the NZC selected in the CSI-RS dimension according to a preset method to map the NZC selected in the CSI-RS dimension to the NZC in the BWP dimension. A detailed description of this will be described later with reference to FIGS. 8A to 8E.

FIG. 7 has been described on the premise that FD compression in the CSI-RS dimension is performed based on the DFT function of FIG. 5, but is not limited thereto. For instance, the baseband processor 110 according to an embodiment may perform FD compression in the CSI-RS dimension using various types of DFT functions, and perform FD compression in which the result is mapped to the BWP dimension. In addition, the FD compression operation of FIG. 7 may be applied as an independent embodiment in which the wireless communication device 100 maps channel characteristic information to FD compression of a high dimension (e.g., BWP dimension) after FD compression of a low dimension (e.g., CSI-RS dimension).

The baseband processor 110 according to an embodiment may replace FD compression of the BWP dimension with FD compression of the CSI-RS dimension. This has the effect of reducing the amount of overhead generated in the FD compression process and reducing energy consumption. In addition, the wireless communication device according to the technical concept of the inventive concept may prevent degradation and distortion of CSI report contents due to interference through a process of compressing channel information in the frequency domain.

FIGS. 8A to 8E are diagrams for explaining an FD compression operation by a second sub-transform block according to example embodiments.

In detail, FIGS. 8A to 8E are diagrams for explaining an FD compression operation by the second sub-transform block 423 of FIG. 4 (e.g., an operation of mapping to FD compression in the BWP dimension after FD compression in the CSI-RS dimension).

As stated earlier, herein, the CSI-RS dimension may refer to a DFT space converted based on the number $N_{SB}^{CSIRS}$ of some subbands in which the CSI-RS is received among BWPs, and the BWP dimension may refer to a DFT space converted based on the number $N_{SB}^{BWP}$ of subbands included in the BWP. Also, herein, "Z" may be expressed as an integer as a ratio of the number $N_{SB}^{BWP}$ of subbands included in the BWP to the number of subbands $N_{SB}^{CSIRS}$ in which the CSI-RS is received.

FIG. 8A illustrates a wireless communication environment 800 for performing FD compression (e.g., illustrated in FIGS. 8B to 8E) by the second sub-transform block 423 of FIG. 4. For example, the wireless communication environment 800 includes a case in which CSI-RS is received in some consecutive subbands of BWP or a case in which the base station receives the CSI reporting band set as subbands of interest (e.g., a subband marked with '1' in the bitmap of the channel information reporting band in FIG. 8A) only for some consecutive subbands of the BWP.

Referring to FIG. 8A, the wireless communication environment 800 of FIGS. 8B to 8E assumes that the BWP 810 for communication between the base station and the wireless communication device 100 includes subbands (e.g., 1st subband $SB_1$ to nth subband $SB_{N_{SB}^{BWP}}$) and some subbands 820 through which CSI-RSs are received include $N_{SB}^{CSIRS}$ subbands (e.g., subband $SB_{N_{start}^{CSIRS}}$ where CSI-RS reception starts to the subband $SB_{N_{end}^{CSIRS}}$ where CSI-RS reception ends). In this case, some subbands 820 through which the CSI-RS is received may be continuous subbands in the frequency domain.

Referring to FIGS. 8B and 8C, an example first oversample DFT block (interchangeably, "oversampling DFT block") 830 in the BWP dimension and a second oversample DFT transform block 840 in the CSI-RS dimension are shown.

In FIG. 8B, the first DFT input matrix $\mathbf{V}_l^{BWP}$ of the first oversample DFT block 830 may represent a matrix of ' $L \times N_{SB}^{BWP}$ ' size, and the area 831 where the CSI-RS is received in the first DFT input matrix $\mathbf{V}_l^{BWP}$ 831 may be represented by an ' $L \times N_{SB}^{CSIRS}$ ' matrix.

The first oversample DFT block 830 may perform BWP-dimensional FD compression using the first DFT function $\mathbf{D}_f^{N_{SB}^{BWP}}$. Here, the first DFT function $\mathbf{D}_f^{N_{SB}^{BWP}}$ may refer to a partial DFT function of the BWP dimension.

The first DFT function $\mathbf{D}_f^{N_{SB}^{BWP}}$ may represent an ' $N_{SB}^{CSIRS} \times N_{SB}^{BWP}$ ' size matrix (e.g., a partial DFT matrix). The area 832 corresponding to the subband in which the CSI-RS is received in the first DFT function $\mathbf{D}_f^{N_{SB}^{BWP}}$ may include DFT columns (e.g., 1st DFT column 832-1, 2nd DFT column 832-2, ..., zth DFT column 832-z) rotated according to a preset period. In this case, the number of rotated DFT columns may be determined based on the ratio Z of the number of subbands $N_{SB}^{BWP}$ constituting the BWP to the number $N_{SB}^{CSIRS}$ of subbands in which the CSI-RS is received. After oversampling by the first oversample DFT block 830, the FD basis and NZC may be selected according to the method described in FIG. 4.

In FIG. 8C, the second oversample DFT block 840 may perform BWP-level FD compression using the CSI-RS-level second oversampled DFT function $\mathbf{R}_r\mathbf{D}_f^{N_{SB}^{CSIRS}}\mathbf{O}_{N_{SB_{start}}^{CSIRS}}$.

The second DFT input matrix $\mathbf{V}_l^{CSIRS}$ 841 of the second oversample DFT block 840 may be expressed as a matrix of ' $N_{SB}^{CSIRS} \times N_{SB}^{CSIRS}$ ' size. The second DFT function $\mathbf{R}_r\mathbf{D}_f^{N_{SB}^{CSIRS}}\mathbf{O}_{N_{SB_{start}}^{CSIRS}}$ (e.g., the first oversampled DFT function 842-1 to the zth oversampled DFT function 842-z) of the second oversample DFT block 840 may represent a matrix of' $N_{SB}^{CSIRS} \times N_{SB}^{CSIRS}$ ' size. For example, each of the first oversample DFT function 842-1 to the zth oversample DFT function 842-z may include an orthogonal matrix of a ' $N_{SB}^{CSIRS} \times N_{SB}^{CSIRS}$ ' size.

The second oversample DFT block 840 may calculate a DFT transformation result for the second DFT input matrix $\mathbf{V}_l^{CSIRS}$ 841 based on Equation 4.

[Equation 4]

$$\widetilde{\mathbf{V}}_{l,r}^{CSIRS} = \mathbf{V}_l^{CSIRS}\mathbf{R}_r\mathbf{D}_f^{N_{SB}^{CSIRS}}\mathbf{O}_{N_{SB_{start}}^{CSIRS}}$$

Here, $\mathbf{R}_r$ is a matrix indicating the rotation index for each oversampled DFT function, and may be composed of a diagonal matrix of a ' $N_{SB}^{CSIRS} \times N_{SB}^{CSIRS}$ ' size. $\mathbf{O}_{N_{SB_{start}}^{CSIRS}}$ is a matrix indicating the reception start position of the CSI-RS and may be composed of a diagonal matrix of size 'x'. For example, when $\mathbf{O}_{N_{SB_{start}}^{CSIRS}}$ may divide the BWP-dimensional DFT function into Z orthogonal matrices of a '$N_{SB}^{CSIRS}$ x $N_{SB}^{CSIRS}$' size, this may refer to a rotation matrix for expressing each orthogonal matrix as $\mathbf{D}_f^{N_{SB}^{CSIRS}}$ of a '$N_{SB}^{CSIRS}$ x $N_{SB}^{CSIRS}$' size.

The rotation index and FD basis selection block 843 may determine (or select) the rotation index and FD basis of the CSI-RS dimension after DFT transformation based on Equation 5.

[Equation 5]

$$\left(J_l^{CSIRS} = \left\{j_{l,1}^{CSIRS}, \cdots, j_{l,M}^{CSIRS}\right\}, r_l\right) = arg \max_{\substack{j_{l,1}^{CSIRS}, \cdots, j_{l,M}^{CSIRS} \in \{1, \cdots, N_{SB}^{CSIRS}\} \\ r_l \in \{1, \cdots, Z\}}} \left\| \mathbf{V}_l^{CSIRS} \mathbf{R}_{r_l} \mathbf{D}_f^{N_{SB}^{CSIRS}} (:, J_l^{CSIRS}) \mathbf{O}_{N_{SB_{start}}^{CSIRS}} \right\|_F^2$$

The $N_{SB}^{BWP}$ - point DFT mapping block 845 may map the rotation index and FD basis of the CSI-RS dimension to the BWP dimension based on Equation 6.

[Equation 6]

$$j_{l,i}^{BWP} = \left(j_{l,i}^{CSIRS} - 1\right) * Z + r_l$$
$$j_{l,1}^{BWP}, \cdots, j_{l,M}^{BWP} \in J_l^{BWP}$$

Here, Z refers to the ratio of the number $N_{SB}^{BWP}$ of subbands constituting the BWP to the number $N_{SB}^{CSIRS}$ of subbands through which the CSI-RS is received, and $r_l$ may refer to a rotation index.

The NZC phase compensation block 847 may map the selected NZC of the CSI-RS dimension to the BWP dimension based on Equation 7.

[Equation 7]

$$p_{l,i}^{BWP} = \left(p_{l,i}^{CSIRS} + \text{round}\left(\left(\left(\frac{j_{l,i}^{CSIRS}}{N_{SB}^{CSIRS}} - \frac{j_{l,i}^{BWP}}{N_{SB}^{BWP}}\right) * \left(\frac{N_{SB}^{CSIRS} - 1}{2} + SB_{start}\right) - SB_{start} * \frac{j_{l,i}^{CSIRS}}{N_{SB}^{CSIRS}}\right) * 16\right)\right) \% 16$$

When the ratio of the number $N_{SB}^{BWP}$ of subbands constituting the BWP to the number $N_{SB}^{CSIRS}$ of subbands in which the CSI-RS is received is an integer, the second compressed data output from the $N_{SB}^{BWP}$ -point DFT mapping block 845 may skip a phase compensation process through a bypass path 848 (e.g., the bypass path 848 may be used when the ratio of the number $N_{SB}^{BWP}$ of subbands constituting the BWP to the number $N_{SB}^{CSIRS}$ of subbands in which the CSI-RS is received is an integer) and generate channel information.

When performing FD compression based on a DFT transform block (e.g., the second oversample DFT block 840) according to an embodiment, in preparation for the DFT transform block (e.g., the first oversample DFT block 830) according to the comparative embodiment, by performing low-dimensional FD compression, the efficiency of FD compression may be maximized by significantly reducing the overhead generated in the FD compression process.

Referring to FIG. 8D, an embodiment of phase compensation according to the starting position of the CSI-RS of the second oversample DFT transform block 840 of FIG. 8C is shown. In FIG. 8D, configurations of FIG. 8D (e.g, configurations 843, 845, 847, 848, 427) that overlap with the above-described drawings may be replaced by the description of the above-described drawings.

In detail, the first case 853 and the second case 854 may be included as an embodiment of the application time point of $\mathbf{O}_{N_{SB_{start}}^{CSIRS}}$ for phase compensation according to the starting position of the CSI-RS.

The third oversample DFT block 850 in the first case 853 may perform BWP-dimensional FD compression using the CSI-RS-dimensional third DFT function $\mathbf{R}_r\mathbf{D}_f^{N_{SB}^{CSIRS}}$. Here, the third DFT function $\mathbf{R}_r\mathbf{D}_f^{N_{SB}^{CSIRS}}$ may refer to an oversampled DFT function.

The third DFT input matrix $\mathbf{V}_l^{CSIRS}$ 851 of the third oversample DFT block 850 may be expressed as a matrix of a ' $\mathrm{L} \times N_{\mathrm{SB}}^{\mathrm{CSIRS}}$ ' size. The third DFT function $\mathbf{R}_r\mathbf{D}_f^{N_{SB}^{CSIRS}}$ of the third DFT transform block 850 (e.g., the first oversample DFT function $\mathbf{R}_1\mathbf{D}_f^{N_{SB}^{CSIRS}}$ 852-1 to the zth oversample DFT function $\mathbf{R}_Z\mathbf{D}_f^{N_{SB}^{CSIRS}}$ ) represents a matrix of a ' $N_{SB}^{CSIRS} \times N_{SB}^{CSIRS}$ ' size. For example, each of the first oversample DFT function $\mathbf{R}_1\mathbf{D}_f^{N_{SB}^{CSIRS}}$ 852-1 to the zth oversample DFT function $\mathbf{R}_Z\mathbf{D}_f^{N_{SB}^{CSIRS}}$ 852-z may include an orthogonal matrix of a ' $N_{SB}^{CSIRS} \times N_{SB}^{CSIRS}$ ' size.

The third oversample DFT block 850 may calculate a DFT transformation result $\widetilde{\mathbf{V}}_l^{CSIRS}$ for the third DFT input matrix $\mathbf{V}_l^{CSIRS}$ 851 based on Equation 8.

[Equation 8]

$$\widetilde{\mathbf{V}}_l^{CSIRS} = \mathbf{V}_l^{CSIRS}\mathbf{R}_r\mathbf{D}_f^{N_{SB}^{CSIRS}}$$

Here, $\mathbf{R}_r$ is a matrix indicating the rotation index for each oversampled DFT function, and may be composed of a diagonal matrix of a ' $N_{SB}^{CSIRS} \times N_{SB}^{CSIRS}$ ' size.

After the third oversample DFT block 850, the rotation index and FD basis may be selected according to the manner described in the second oversample DFT block 840 of FIG. 8C, and the rotation index and FD basis of the CSI-RS dimension may be mapped to the BWP dimension.

The NZC phase compensation block 855 may apply $\mathbf{O}_{N_{SB_{start}}^{CSIRS}}$ indicating a start position of a received subband of the CSI-RS to compensate for a phase used for mapping NZC of the CSI-RS dimension to the BWP dimension.

Based on the method described above in FIG. 4, the NZC selection and quantization block selects a dominant NZC among NZCs mapped to the BWP dimension and performs quantization for generating channel information (e.g., a UCI bit sequence). Here, in the first case 853, NZC may be selected based on the DFT result mapped to the BWP

dimension by applying $\mathbf{O}_{N_{SB_{start}}^{CSIRS}}$ before NZC selection and quantization.

The oversample DFT block 860 of the second case 854 is the same as the third oversample DFT block 850, and the rotation index and FD basis selection blocks and the $N_{\mathrm{SB}}^{\mathrm{BWP}}$ -point DFT mapping blocks may be the same as those of the first case 853.

However, in the second case 854, unlike the first case 853, the application point of $\mathbf{O}_{N_{SB_{start}}^{CSIRS}}$ may be applied after NZC selection and quantization. That is, in the second case 854, by applying $\mathbf{O}_{N_{SB_{start}}^{CSIRS}}$ after NZC selection and quantization, NZC may be selected based on the DFT result in the CSI-RS dimension and mapping may be performed in the BWP dimension.

The first case 853 and the second case 854 of FIG. 8D have different application times of $\mathbf{O}_{N_{SB_{start}}^{CSIRS}}$, but the FD basis of the finally selected BWP dimension and NZC in each case may be the same.

FIG. 8E illustrates an embodiment of FD compression through DFT without considering the effect of oversampling when the ratio Z of the number $N_{\mathrm{SB}}^{\mathrm{BWP}}$ of subbands constituting the BWP to the number $N_{\mathrm{SB}}^{\mathrm{CSIRS}}$ of subbands in which the CSI-RS is received is not an integer. In FIG. 8E, configurations of FIG. 8E (e.g., configurations 845, 848, 426, 427) that overlap with the above-described drawings may be replaced by the description of the above-described drawings.

The fourth oversample DFT block 870 may perform BWP-level FD compression using the CSI-RS-level DFT function $\mathbf{D}_f^{N_{SB}^{CSIRS}}\mathbf{O}_{N_{SB_{start}}^{CSIRS}}$. Here, the DFT function $\mathbf{D}_f^{N_{SB}^{CSIRS}}\mathbf{O}_{N_{SB_{start}}^{CSIRS}}$ may refer to a function that does not consider the effect of the oversampled DFT or uses only some of the oversampled DFTs (e.g., $r_l$ is regarded as 1).

The fourth DFT input matrix $\mathbf{V}_l^{CSIRS}$ 871 of the fourth oversample DFT block 870 may be expressed as a matrix of a '$\mathrm{L} \times N_{\mathrm{SB}}^{\mathrm{CSIRS}}$' size.

The fourth oversample DFT block 870 may calculate a DFT transformation result $\widetilde{\mathbf{V}}_l^{CSIRS}$ for the fourth DFT input matrix $\mathbf{V}_l^{CSIRS}$ 871 based on Equation 9.

[Equation 9]

$$\widetilde{\mathbf{V}}_l^{CSIRS} = \mathbf{V}_l^{CSIRS}\mathbf{D}_f^{N_{SB}^{CSIRS}}\mathbf{O}_{N_{SB_{start}}^{CSIRS}}$$

Here, the DFT function $\mathbf{D}_f^{N_{SB}^{CSIRS}}\mathbf{O}_{N_{SB_{start}}^{CSIRS}}$ may refer to a function that does not consider the effect of the oversampled DFT or uses only some of the oversampled DFTs (e.g., $r_l$ is regarded as 1).

In one embodiment, when the ratio Z of the number $N_{\mathrm{SB}}^{\mathrm{BWP}}$ of subbands constituting the BWP to the number $N_{\mathrm{SB}}^{\mathrm{CSIRS}}$ of subbands in which the CSI-RS is received is not an integer, without considering the oversampled DFT

effect, $r_l$ may be regarded as 1 (e.g., the DFT function 872 of FIG. 8E). In this case, the FD basis in the CSI-RS dimension after DFT transformation is determined (or selected) by removing '$\mathbf{R}_{rl}$' from Equation 5 of FIG. 8C (i.e., not selecting a rotation index), the FD basis selected in the CSI-RS dimension may be mapped to the BWP dimension based on Equation 6 described above. In addition, the embodiment of phase compensation according to the starting position of the CSI-RS of FIG. 8D is applicable to the embodiment of FIG. 8E.

FIG. 9 is a flowchart illustrating a method of operating a wireless communication device according to an example embodiment.

In detail, FIG. 9 is a diagram for explaining an operation of performing BWP-dimensional FD compression (e.g., partial DFT application) by the baseband processor 110 (e.g., the third sub-transform block 424 of FIG. 4) when the baseband processor 110 of the wireless communication device 100 of FIG. 2 receives CSI-RS in some subbands of the entire BWP.

As defined earlier, herein, the CSI-RS dimension may refer to a DFT space converted based on the number of some subbands in which the CSI-RS is received among a BWP, and the BWP dimension may refer to a DFT space converted based on the number of subbands included in the BWP.

Referring to FIG. 9, the operation of performing FD compression by applying partial DFT may include operations S210, S220, S230, S240, S250, S260, and S270. Here, operations S210, S220, S230, S240, S260 and S270 correspond to operations S10, S20, S30, S40, S60, and S70 of FIG. 4, respectively, and thus redundant descriptions thereof may be omitted.

In operation S250, the baseband processor 110 may generate second compressed data using the partial DFT function.

For example, the baseband processor 110 compresses the SD-compressed first compressed data in the frequency domain using a partial DFT function (hereinafter, referred to as FD compression) to generate second compressed data. For example, the baseband processor 110 may select an FD basis indicating an index of a column having a dominant value among second compressed data obtained by re-expressing the first compressed data in the partial DFT space. In addition, the baseband processor 110 may calculate absolute values of components included in the second compressed data (e.g., matrix form data) in the DFT transformation space, and select a preset number of NZCs according to the size of the absolute values. The baseband processor 110 may quantize channel information including the selected FD basis and NZC to display the channel information in the UCI bit sequence. A detailed description of this will be described later with reference to FIGS. 10A to 10D.

In the wireless communication system according to an embodiment, the base station performs FD compression through partial DFT according to the amount of channel information and adjusts the size of the CSI-RS allocation area so that there is an effect of improving resource efficiency by transmitting data only for a certain wireless communication resource. In addition, the wireless communication device according to a technical concept of the inventive concept may prevent degradation and distortion of CSI report content due to interference through a compression process in the frequency domain (FD).

FIGS. 10A to 10D are diagrams for explaining an FD compression operation by a third sub-transform block according to example embodiments.

In detail, FIGS. 10A to 10D show diagrams for explaining an FD compression operation by the third sub-transform block 424 of the baseband processor 110 of FIG. 4.

FIG. 10A shows a diagram for explaining the partial DFT function of operation S250 of FIG. 9 and the resulting DFT transformation result.

Referring to FIG. 10A, the base station allocates $N_{SB}^{BWP}$ subbands to the BWP 1001 and allocates $N_{SB}^{CSIRS}$ subbands (or frequency resources) to the area 1002 (e.g., some sub-band areas of BWP 1001) in which the CSI-RS is transmitted.

The baseband processor 110 may generate a partial DFT function $\mathbf{D}_f^{N_{SB}^{BWP},N_{SB}^{CSIRS}}$ for FD compression based on the DFT basis of the position of the subband corresponding to the area where the CSI-RS is received from the $N_{SB}^{BWP}$-point DFT matrix (or DFT function). For example, the partial DFT function $\mathbf{D}_f^{N_{SB}^{BWP},N_{SB}^{CSIRS}}$ may refer to a partial DFT matrix of a $N_{SB}^{CSIRS} \times N_{SB}^{BWP}$ size.

The baseband processor 110 may calculate a partial DFT transformation result $\tilde{\mathbf{V}}_l^{BWP}$ for the DFT input matrix $\mathbf{V}_l^{CSIRS}$ based on Equation 10.

[Equation 10]

$$\tilde{\mathbf{V}}_l^{BWP} = \mathbf{V}_l^{CSIRS}\mathbf{D}_f^{N_{SB}^{BWP},N_{SB}^{CSIRS}}$$

The baseband processor 110 may calculate an optimized partial DFT transformation result $\tilde{\mathbf{V}}_l^{BWP}$ based on Equation 11 according to the sparsity characteristic of the partial DFT transformation result $\tilde{\mathbf{V}}_l^{BWP}$.

[Equation 11]

$$\tilde{\mathbf{V}}_l^{BWP} = arg\min_X \left\| X - \mathbf{V}_l^{CSIRS}\mathbf{D}_f^{N_{SB}^{BWP},N_{SB}^{CSIRS}} \right\|_F^2$$
$$s.t.\ supp\big(X(1,:)\big) = \cdots = supp\big(X(1,:)\big) = J, |J| = M$$

Here, *supp*(*a*) may refer to a set of position indices of non-zero or significant coefficients of vector a. M may refer to a parameter required for FD basis selection. For example, the baseband processor 110 may derive a partial DFT transformation result $\tilde{\mathbf{V}}_l^{BWP}$ based on Equation 11 through algorithms related to compressed sensing, sparse signal recovery, or sparse representation. Examples of related algorithms may include a basis pursuit (BP) algorithm related to convex relaxation, a basis pursuit with inequality constraints (BPIC) algorithm, a basis pursuit denoising (BPDN) algorithm, and the like. In addition, an orthogonal matching pursuit (OMP) algorithm related to greedy pursuit, a stagewise orthogonal matching pursuit (StOMP) algorithm, a regularized orthogonal matching pursuit (R-OMP) algorithm, a compressive sampling matching pursuit (CoSaMP) algorithm, an iterative hard thresholding (IHT) algorithm, a two-stage thresholding (TST) algorithm, a subspace pursuit (SP) algorithm, and the like may be used. Alternatively, a method of finding an optimized DFT result by substituting possible candidates from a brute force perspective may be utilized.

FIG. 10B shows a partial DFT transformation result $\tilde{\mathbf{V}}_l^{BWP}$ derived from Equation 11 of FIG. 10A.

Referring to FIG. 10B, the baseband processor 110 performs FD compression based on a partial DFT function $\mathbf{D}_f^{N_{SB}^{BWP},N_{SB}^{CSIRS}}$ 1022 on a DFT input matrix $\mathbf{V}_l^{CSIRS}$ 1021 based on Equation 10 of FIG. 10 to derive the partial DFT transformation result $\tilde{\mathbf{V}}_l^{BWP}$ 1023. For example, when the DFT input matrix $\mathbf{V}_l^{CSIRS}$ 1021 is re-expressed as a partial DFT space, it may appear as a column vector (or column index) 1024 having a dominant value. The baseband processor 110 may determine (or select) the column vector (or column index) 1024 as an FD basis.

FIG. 10C shows a partial DFT function according to an embodiment when there is an 'inactive' subband in the CSI-RS reporting band received from the base station.

Referring to FIG. 10C, the DFT input matrix $\mathbf{V}_l^{CSIRS_active}$ 1031 may be composed of a matrix of a 'L x $N_{SB}^{CSIRS} - N_{SB_inactive}^{CSIRS}$ ' size, and the partial DFT function $\mathbf{D}_f^{N_{SB}^{BWP},N_{SB_active}^{CSIRS}}$ 1032 may be composed of a DFT matrix of a '$N_{SB}^{CSIRS} - N_{SB_inactive}^{CSIRS}$ x $N_{SB}^{BWP}$' size.

The baseband processor 110 may calculate a partial DFT transformation result $\tilde{\mathbf{V}}_l^{BWP}$ based on Equation 12.

[Equation 12]

$$\tilde{\mathbf{V}}_l^{BWP} = \mathbf{V}_l^{CSIRS_active} \mathbf{D}_f^{N_{SB}^{BWP}, N_{SB_active}^{CSIRS}}$$

The baseband processor 110 may calculate an optimized partial DFT transformation result $\tilde{\mathbf{V}}_l^{BWP}$ through an optimization equation similar to Equation 11 of FIG. 10B.

FIG. 10D shows a partial DFT function according to another embodiment when there is an 'inactive' subband in the CSI-RS reporting band received from the base station.

If there is an 'inactive' subband in the CSI-RS reporting band received from the base station, the baseband processor 110 may pad the 'inactive' subband 1043 of the DFT input matrix $\mathbf{V}_l^{CSIRS}$ 1041 with a certain value (e.g., '0'), and derive an optimized DFT transformation result by re-expressing the padded result in a DFT space in a manner similar to that of FIG. 10B (e.g., Equation 11).

FIG. 11 is a flowchart illustrating a method of operating a wireless communication device according to an example embodiment.

In detail, FIG. 11 is a diagram for explaining an operation of performing BWP-dimensional FD compression (e.g., apply DFT after performing pre-processing) by the baseband processor 110 (e.g., the third sub-transform block 425 of FIG. 4) when the baseband processor 110 of the wireless communication device 100 of FIG. 2 receives CSI-RS in some subbands of the entire BWP.

As stated earlier, the "CSI-RS dimension" may refer to a DFT space converted based on the number $N_{\mathrm{SB}}^{\mathrm{CSIRS}}$ of some subbands in which the CSI-RS is received among BWPs, and the "BWP dimension" may refer to a DFT space converted based on the number of subbands $N_{\mathrm{SB}}^{\mathrm{BWP}}$ included in the BWP.

Referring to FIG. 11, the operation of performing FD compression by applying DFT after performing pre-processing may include operations S310, S320, S330, S340, S351, S352, S360, and S370. Here, operations S310 to S340 and operations S360 to S370 correspond to the operations S10, S20, S30, S40, S60, and S70 of FIG. 4, respectively, and thus redundant descriptions may be replaced with those of FIG. 4.

In operation S351, the baseband processor 110 may perform pre-processing according to a preset method on the first compressed data. Here, the first compressed data may include a DFT input matrix $\mathbf{V}_l^{\mathrm{BWP}}$ as a result of SD compression.

When CSI-RS is received in some subbands of the entire BWP, the baseband processor 110 may configure a BWP-dimensional DFT input matrix $\mathbf{V}_l^{\mathrm{BWP}}$ by performing pre-processing on subbands in which CSI-RS are not received. For example, the pre-processing method may include a zero padding method, a zero interpolation method, a phase difference rotation method, a mirror copy method, a repeating method, and the like. A detailed description of this will be described later in FIGS. 12A to 12G.

For example, the baseband processor 110 may select an FD basis indicating an index of a column having a dominant value among the second compressed data re-expressing the first compressed data (e.g., the BWP-dimensional DFT input matrix $\mathbf{V}_l^{\mathrm{BWP}}$) in the DFT space. In addition, the baseband processor 110 may calculate absolute values of components included in the second compressed data (e.g., matrix form data) in the DFT transformation space, and select a preset number of NZCs according to the size of the absolute values. The baseband processor 110 may quantize channel information including the selected FD basis and NZC to display the channel information in the UCI bit sequence.

In operation S352, the baseband processor 110 may generate second compressed data by using a DFT function having a size corresponding to the number of subbands constituting the BWP. For example, the baseband processor 110 may perform BWP-dimensional FD compression by performing DFT transformation on the BWP-dimensional DFT input matrix $\mathbf{V}_l^{\mathrm{BWP}}$ configured through the pre-processing operation of operation 351.

A wireless communication device according to an embodiment performs pre-processing on a subband in which CSI-RS is not transmitted to configure a BWP-dimensional DFT input matrix $\mathbf{V}_l^{\mathrm{BWP}}$, so that while complying with FD compression-related standards (e.g., performing FD compression through BWP-dimensional DFT transformation) of communication standards (e.g., 3GPP Rel. 16 to 17), there is an effect of reducing the overhead generated in FD compression through the pre-processing process. In addition, the wireless communication device according to the technical concept of the inventive concept may prevent deformation and distortion of CSI report content due to interference through a compression process in the frequency domain (FD).

FIGS. 12A to 12G are diagrams for explaining an FD compression operation by a fourth sub-transform block according to examples of the inventive concept.

In detail, FIGS. 12A to 12G show diagrams for explaining an FD compression operation by the fourth sub-transform block 425 of the baseband processor 110 of FIG. 4. In FIGS. 12A to 12G, a horizontal axis may represent a subband area in a frequency domain, and a vertical axis may represent a precoding vector of a subband. FIGS. 12A to 12G assume that the CSI-RS is not allocated to a subband of a low frequency band for convenience of explanation, and the embodiments of FIGS. 12A to 12G are applicable even if the location of a subband to which CSI-RS is not allocated is changed.

FIG. 12A is a diagram for explaining the first pre-processing method and the second pre-processing method of operation S351 of FIG. 11. In FIG. 12A, it is assumed that a first area 1201 is a subband area to which CSI-RSs are not allocated, and a second area 1202 is a subband area to which CSI-RSs are allocated.

The first pre-processing method may include a linear interpolation method (e.g., zero interpolation method).

For example, the baseband processor 110 may set the precoding vector 1203 of the first subband of the first area 1201 to a zero vector, and configure a DFT input matrix $\mathbf{V}_l^{\mathrm{BWP}}$ by performing linear interpolation with the precoding vector 1204 of the first subband to which the CSI-RS of the second area 1202 is allocated. To this end, the DFT input matrix $\mathbf{V}_l^{\mathrm{BWP}}$ may be expressed by Equation 13.

[Equation 13]

$$\mathbf{V}_l^{\mathrm{BWP}} = \left[\mathbf{0}_{L\times 1}, \frac{1}{N_1}\mathbf{V}_{N_{SB_{start}}^{CSIRS}}(:,l), \ldots, \frac{n_1}{N_1}\mathbf{V}_{N_{SB_{start}}^{CSIRS}}(:,l), \ldots, \frac{N_1-1}{N_1}\mathbf{V}_{N_{SB_{start}}^{CSIRS}}(:,l), \mathbf{V}_{N_{SB_{start}}^{CSIRS}}(:,l), \mathbf{V}_{N_{SB_{start}}^{CSIRS}+1}(:,l), \ldots, \mathbf{V}_{N_{SB}^{BWP}-1}(:,l)\right]$$

Here, $\boldsymbol{a} = \mathbf{V}_{N_{SB_{start}}^{CSIRS}}(:,l)$, and $N_1$ may refer to the number of precoding vectors of a subband to which a CSI-RS is not allocated, and $n_1$, may refer to an index of a subband to which a CSI-RS, which is $0 \le n_1 \le N_1$, , is not allocated.

Although not shown in FIG. 12A, the second pre-processing method may include a zero padding method.

The baseband processor 110 may configure a DFT input matrix $\mathbf{V}_l^{\mathrm{BWP}}$ by padding the first area 1201 with a certain value (e.g., '0'). With this approach, the DFT input matrix $\mathbf{V}_l^{\mathrm{BWP}}$ may be expressed by Equation 14.

[Equation 14]

$$\mathbf{V}_l^{\mathrm{BWP}} = \left[\mathbf{0}_{L\times1}, \dots, \mathbf{0}_{L\times1}, \mathbf{V}_{N_{SB_{start}}^{CSIRS}}(:,l), \mathbf{V}_{N_{SB_{start}}^{CSIRS}+1}(:,l), \dots, \mathbf{V}_{N_{SB_{start}}^{CSIRS}+N_{\mathrm{SB}}^{\mathrm{CSIRS}}-1}(:,l), \mathbf{0}_{L\times1}, \dots, \mathbf{0}_{L\times1}\right] \in \mathbb{C}^{L\times N_{\mathrm{SB}}^{\mathrm{BWP}}}$$

$$\mathbf{0}_{L\times1} = [0,0,\dots,0]^T \in \mathbb{C}^{L\times1}$$

FIG. 12B is a diagram for explaining the third pre-processing method of operation S351 of FIG. 11. In FIG. 12B, it is assumed that a first area 1211 is a subband area to which CSI-RS is not allocated, and a second area 1212 is a subband area to which CSI-RS is allocated.

The third pre-processing method may include a linear interpolation method using phase difference rotation (e.g., phase difference rotation-based zero interpolation method).

For example, the baseband processor 110 may set the precoding vector 1213 of the first subband of the first area 1211 to a zero vector, and configure a DFT input matrix $\mathbf{V}_l^{\mathrm{BWP}}$ by applying phase difference rotation after performing linear interpolation with the precoding vector 1214 of the first subband to which the CSI-RS of the second area 1212 is allocated. In this regard, the DFT input matrix $\mathbf{V}_l^{\mathrm{BWP}}$ may be expressed by Equation 15.

[Equation 15]

$$\mathbf{V}_l^{\mathrm{BWP}} = \left[\mathbf{0}_{L\times1}, \frac{1}{N_1}\mathbf{R}_{\mathrm{p}}(\theta_1)\mathbf{V}_{N_{SB_{start}}^{CSIRS}}(:,l), \dots, \frac{n_1}{N_1}\mathbf{R}_{\mathrm{p}}(\theta_{n_1})\mathbf{V}_{N_{SB_{start}}^{CSIRS}}(:,l), \dots, \frac{N_1-1}{N_1}\mathbf{R}_{\mathrm{p}}\left(\theta_{N_1-1}\right)\mathbf{V}_{N_{SB_{start}}^{CSIRS}}(:,l), \mathbf{V}_{N_{SB_{start}}^{CSIRS}}(:,l), \mathbf{V}_{N_{SB_{start}}^{CSIRS}+1}(:,l), \dots, \mathbf{V}_{N_{SB}^{BWP}-1}(:,l)\right]$$

Here, $\boldsymbol{a} = \mathbf{V}_{N_{SB_{start}}^{CSIRS}}(:,l)$, and $N_1$ refers to the number of precoding vectors of a subband to which a CSI-RS is not allocated, and $n_{1'}$ refers to an index of a subband to which a CSI-RS, which is $0 \le n_1 < N_{1'}$, is not allocated. $\mathbf{R}_{\mathrm{p}}(\theta)$ may be defined based on Equation 16 as a phase difference rotation matrix, and $\mathbf{R}_{\mathrm{p}}(\theta)a$ may be defined based on Equation 17 as a vector increasing the phase difference between components of the $\boldsymbol{a}$ vector 1214 by $\theta$.

[Equation 16]

$$\mathbf{R}_{\mathrm{P}}(\theta) = \begin{bmatrix} 1 & 0 & 0 & 0 \\ 0 & e^{j\theta} & 0 & 0 \\ \vdots & \vdots & \ddots & \vdots \\ 0 & 0 & 0 & e^{j(L-1)\theta} \end{bmatrix}$$

[Equation 17]

$$\mathbf{R}_{\mathrm{P}}(\theta)\boldsymbol{a} = \begin{bmatrix} 1 & 0 & 0 & 0 \\ 0 & e^{j\theta} & 0 & 0 \\ \vdots & \vdots & \ddots & \vdots \\ 0 & 0 & 0 & e^{j(L-1)\theta} \end{bmatrix} \begin{bmatrix} a_0 \\ a_1 \\ \vdots \\ a_{L-1} \end{bmatrix} = \begin{bmatrix} a_0 \\ a_1 e^{j\theta} \\ \vdots \\ a_{L-1} e^{j(L-1)\theta} \end{bmatrix}$$

In addition, the $\theta_1$, $\theta_2$, ..., $\theta_{N1-1}$ values of Equation 15 are determined differently depending on the phase difference rotation method, the phase difference rotation method may include 1) a random phase difference rotation method (e.g., a method of randomly selecting a $\theta$ value), and 2) a phase difference cyclic shift method (e.g., a method of applying $\theta_{N1-1} = \delta$, $\theta_{N1}$-2 = 2$\delta$, $\theta_1 = (N_1 - 1)\delta$). Note that the baseband processor 110 according to an embodiment is not limited thereto; various alternative phase difference rotation schemes may be applied.

FIG. 12C is a diagram for explaining a fourth pre-processing method in operation S351 of FIG. 11. In FIG. 12C, it is assumed that a first area 1221 is a subband area to which CSI-RS is not allocated, and a second area 1222 is a subband area to which CSI-RS is allocated.

The fourth pre-processing method may include a linear interpolation method to which an average is applied.

For example, the baseband processor 110 calculates an average vector $\overline{m}$ of precoding vectors of the subbands of the second area 1222 and calculates the precoding vector of the first subband 1223 to which CSI-RS is not allocated;. The baseband processor 110 may then configure a DFT input matrix $\mathbf{V}_l^{\mathrm{BWP}}$ by performing linear interpolation with the precoding vector of the first subband 1224 to which the CSI-RS of the second area 1222 is allocated. In this case, the DFT input matrix $\mathbf{V}_l^{\mathrm{BWP}}$ may be expressed by Equation 18, and although not shown, phase difference rotation may also be applied.

[Equation 18]

$$\mathbf{V}_l^{\mathrm{BWP}} = \left[\mathbf{0}_{L\times 1}, \frac{1}{N_1}\mathbf{v}_\mathbf{A}, \ldots, \frac{n_1}{N_1}\mathbf{v}_\mathbf{A}, \ldots, \frac{N_1-1}{N_1}\mathbf{v}_\mathbf{A}, \mathbf{V}_{N_{SB_{start}}^{CSIRS}}(:,l), \mathbf{V}_{N_{SB_{start}}^{CSIRS}+1}(:,l), \ldots, \mathbf{V}_{N_{\mathrm{SB}}^{\mathrm{BWP}}-1}(:,l)\right]$$

where $\mathbf{v_A}$ = a - $\boldsymbol{m}$

Here, $\boldsymbol{a} = \mathbf{V}_{N_{SB_{start}}^{CSIRS}}(:,l)$, and $N_1$ may refer to the number of precoding vectors of a subband to which a CSI-RS is not allocated, and $n_{1'}$ may refer to an index of a subband to which a CSI-RS, which is $0 \le n_1 < N_{1'}$, is not allocated. The average vector $\overline{\boldsymbol{m}}$ may be calculated based on Equation 19.

[Equation 19]

$$\boldsymbol{m} = \frac{1}{N_{\mathrm{SB}}^{\mathrm{CSIRS}}}\left(\mathbf{V}_{N_{SB_{start}}^{CSIRS}}(:,l) + \mathbf{V}_{N_{SB_{start}}^{CSIRS}+1}(:,l) + \cdots + \mathbf{V}_{N_{\mathrm{SB}}^{\mathrm{BWP}}-1}(:,l)\right)$$

FIG. 12D is a diagram for explaining the fifth pre-processing method of operation S351 of FIG. 11. In FIG. 12D, it is assumed that a first area 1231 is a subband area to which CSI-RS is not allocated, and a second area 1232 is a subband area to which CSI-RS is allocated.

A fifth pre-processing method may include a mirror copy method.

For example, the baseband processor 110 mirror-copies the precoding vector of the second area 1232 to the first area 1231 based on the first subband 1234 of the second area 1232 and configure the DFT input matrix $\mathbf{V}_l^{\mathrm{BWP}}$. At this time, the DFT input matrix $\mathbf{V}_l^{\mathrm{BWP}}$ may be expressed by Equation 20.

[Equation 20]

$$\mathbf{V}_l^{\mathrm{BWP}} = \left[\mathbf{V}_{N_{SB_{start}}^{CSIRS}+N_1}(:,l), \ldots, \mathbf{V}_{N_{SB_{start}}^{CSIRS}+n}(:,l), \ldots, \mathbf{V}_{N_{SB_{start}}^{CSIRS}+1}(:,l), \mathbf{V}_{N_{SB_{start}}^{CSIRS}}(:,l), \mathbf{V}_{N_{SB_{start}}^{CSIRS}+1}(:,l), \ldots, \mathbf{V}_{N_{\mathrm{SB}}^{\mathrm{BWP}}-1}(:,l)\right]$$

Here, $\boldsymbol{a}_n = \mathbf{V}_{N_{SB_{start}}^{CSIRS}+n}(:,l)$, and $N_{\cdot 1}$ may refer to the number of precoding vectors of a subband to which a CSI-RS is not allocated, and n and m may refer to an index of a subband to which a CSI-RS, which is $0 \le n \le m < N_{1'}$, is not allocated.

FIG. 12E is a diagram for explaining a sixth pre-processing method of operation S351 of FIG. 11. In FIG. 12E, it is assumed that a first area 1241 is a subband area to which CSI-RS is not allocated, and a second area 1242 is a subband area to which CSI-RS is allocated.

A sixth pre-processing method may include a repetition method.

For example, the baseband processor 110 may configure a DFT input matrix $\mathbf{V}_l^{\mathrm{BWP}}$ by repeatedly applying the precoding vector of the second area 1232 to the first area 1231. At this time, the DFT input matrix $\mathbf{V}_l^{\mathrm{BWP}}$ may be expressed by Equation 21.

[Equation 21]

$$\mathbf{V}_l^{\mathrm{BWP}} = \left[\ldots, \mathbf{V}_{N_{SB_{start}}^{CSIRS}}(:,l), \ldots, \mathbf{V}_{N_{\mathrm{SB}}^{\mathrm{BWP}}-1}(:,l), \mathbf{V}_{N_{SB_{start}}^{CSIRS}}(:,l), \ldots, \mathbf{V}_{N_{\mathrm{SB}}^{\mathrm{BWP}}-1}(:,l), \mathbf{V}_{N_{SB_{start}}^{CSIRS}}(:,l), \mathbf{V}_{N_{SB_{start}}^{CSIRS}+1}(:,l), \ldots, \mathbf{V}_{N_{\mathrm{SB}}^{\mathrm{BWP}}-1}(:,l)\right]$$

Here, $a_n = \mathbf{V}_{N_{SB_{start}}^{CSIRS}+n}(:,l)$, and $N_1$' refers to the number of precoding vectors of a subband to which CSI-RS is not allocated, and n may be defined as $0 \le n < N_{\mathrm{SB}}^{\mathrm{CSIRS}}$.

FIG. 12F shows a diagram for explaining a seventh pre-processing method of operation S351 of FIG. 11. In FIG. 12F, it is assumed that a first area 1251 is a subband area to which CSI-RS is not allocated, and a second area 1252 is a subband area to which CSI-RS is allocated.

A seventh pre-processing method may include a repetition method.

For example, the baseband processor 110 may repeatedly apply the precoding vector of the second area 1252 to the first area 1251, and configure a DFT input matrix $\mathbf{V}_l^{\mathrm{BWP}}$ by padding a certain value (e.g., '0') to the remaining subband area 1253 of the first area 1251. At this time, the DFT input matrix $\mathbf{V}_l^{\mathrm{BWP}}$ may be expressed by Equation 22.

[Equation 22]

$$\mathbf{V}_l^{\mathrm{BWP}} = \left[\mathbf{0}, \ldots, \mathbf{0}, \mathbf{V}_{N_{SB_{start}}^{CSIRS}}(:,l), \ldots, \mathbf{V}_{N_{\mathrm{SB}}^{\mathrm{BWP}}-1}(:,l), \mathbf{V}_{N_{SB_{start}}^{CSIRS}}(:,l), \ldots, \mathbf{V}_{N_{\mathrm{SB}}^{\mathrm{BWP}}-1}(:,l), \mathbf{V}_{N_{SB_{start}}^{CSIRS}}(:,l), \mathbf{V}_{N_{SB_{start}}^{CSIRS}+1}(:,l), \ldots, \mathbf{V}_{N_{\mathrm{SB}}^{\mathrm{BWP}}-1}(:,l)\right]$$

Here, $a_n = \mathbf{V}_{N_{SB_{start}}^{CSIRS}+n}(:,l)$, and $N_1$' refers to the number of precoding vectors of a subband to which CSI-RS is not allocated, and n may be defined as $0 \le n < N_{\mathrm{SB}}^{\mathrm{CSIRS}}$.

FIG. 12G shows a diagram for explaining an eighth pre-processing method of operation S351 of FIG. 11. In FIG. 12G, configurations of FIG. 12G (e.g., configurations 848, 410, 426, 427, 430) that overlap with the above-described drawings may be replaced by the description of the above-described drawings.

An eighth pre-processing method may include a wide band (WB) precoding method.

The baseband processor 110 may replace the matrix $\mathbf{V}_n$ corresponding to the channel characteristic information of the nth subband with a wide band matrix $\mathbf{V}_{WB}$ after SD compression. For example, when the DFT block 1260 of the baseband processor 110 compresses the matrix $\mathbf{V}_l^{CSIRS}$ of the 1st layer of CSI-RS area in the frequency domain, if the number of FD basis to effectively represent the frequency domain characteristics of the matrix (e.g., changes in the frequency aspect, etc.) is identified as insufficient, rather than compressing and transmitting the matrix $\mathbf{V}_l^{CSIRS}$ of the 1st layer of CSI-RS area, the matrix $\mathbf{V}_{WB,l}$ of the 1st layer in a wide band perspective may be quantized and transmitted to the base station. Here, $\mathbf{V}_{WB,l}$ may include all CSI-RS channel information matrices in which the subband bitmap is 'active' or a matrix after SD compression is performed by base station precoding determined by the terminal.

For example, the DFT block 1260 of the baseband processor 110 may determine (or select) a representative channel among subbands to which the CSI-RS is allocated, and after copying the channel values of the representative channel to channel values of all subbands of the entire BWP, perform FD compression on subbands of the entire BWP.

FIG. 13 is a block diagram illustrating an electronic device according to an example embodiment.

The wireless communication device 1300 of FIG. 13 may correspond to the wireless communication device 100 of FIG. 1.

Referring to FIG. 13, the electronic device may include a memory 1310, a processor unit 1320, an input/output control unit 1340, a display unit 1350, an input device 1360, and a communication processing unit 1390. Here, a plurality of memories 1310 may exist. A brief discussion of each component is as follows.

The memory 1310 may include a program storage unit 1311 for storing a program for controlling the operation of the electronic device, and a data storage unit 1312 for storing data generated during program execution. The data storage unit 1312 may store data necessary for the operation of the application program 1313 and the CSI compression setting program 1314. The program storage unit 1311 may include an application program 1313 and a CSI compression setting program 1314. Here, the program included in the program storage unit 1311 may be expressed as an instruction set or as a set of instructions.

The application program 1313 includes an application program operating in the electronic device. That is, the application program 1313 may include instructions of an application driven by the processor 1322. According to example embodiments, when CSI-RSs are allocated only to some subbands in the entire BWP, the CSI compression configuration program 1314 may perform frequency domain compression using a DFT function (e.g., DFT function in CSI-RS dimension, partial DFT function, oversampled DFT function, etc.) based on channel characteristic information of a subband to which the CSI-RS is allocated.

The peripheral device interface 1323 may control the connection between the input/output peripheral device of the base station and the processor 1322 and the memory interface 1321. The processor 1322 controls the base station to provide a corresponding service using at least one software program. In this case, the processor 1322 may execute at least one program stored in the memory 1310 to provide a service corresponding to the program.

The input/output control unit 1340 may provide an interface between an input/output device such as the display unit 1350 and the input device 1360 and the peripheral device interface 1323. The display unit 1350 displays state information, input characters, moving pictures, and still pictures. For example, the display unit 1350 may display application program information driven by the processor 1322.

The input device 1360 may provide input data generated by selection of the electronic device to the processor unit 1320 through the input/output control unit 1340. In this case, the input device 1360 may include a keypad including at least one hardware button and a touch pad for sensing touch information. For example, the input device 1360 may provide touch information, such as a touch sensed through a touch pad, a touch movement, and a touch release, to the processor 1322 through the input/output controller 1340. The electronic device may include a communication processing unit 1390 that performs communication functions for voice communication and data communication. The communication processing unit 1390 may include a plurality of antenna modules 1392 for supporting millimeter wave band communication according to example embodiments.

While the inventive concept has been particularly shown and described with reference to embodiments thereof, it will be understood that various changes in form and details may be made therein without departing from the scope of the following claims.

## Claims

1. An operating method of a wireless communication device, the method comprising:

    receiving a channel state information reference signal (CSI-RS) from a base station;
    generating channel information by estimating a channel between the wireless communication device and the base station, based on the CSI-RS; and
    reporting the channel information to the base station,
    wherein the generating of the channel information comprises:

        generating first compressed data by compressing, in a spatial domain, channel characteristic information of a subband in which the CSI-RS is received;
        generating second compressed data by compressing the first compressed data in a frequency domain using a first Discrete Fourier transform (DFT) function having a size corresponding to a number of subbands in which the CSI-RS is received in a bandwidth part (BWP) for communication with the base station; and
        generating the channel information, based on the second compressed data.

2. The method of claim 1, wherein the generating of the second compressed data further comprises, when bitmap information indicating at least one subband of interest of the base station is received from the base station, generating the second compressed data by compressing the first compressed data in the frequency domain using a second DFT function having a size corresponding to the number of subbands of interest.

3. The method of claim 1, wherein, when a ratio of the number of subbands constituting the BWP to the number of subbands through which the CSI-RS is received is an integer, the generating of the second compressed data further comprises:

   generating a third DFT function in the form of an oversampled DFT function by applying at least one of a rotation index and a position indication matrix of the CSI-RS to the first DFT function; and
   generating the second compressed data by compressing the first compressed data in the frequency domain by using the oversampled DFT function.

4. The method of claim 3, wherein the number of rotation indices is determined based on the ratio of the number of subbands constituting the BWP to the number of subbands through which the CSI-RS is received.

5. The method of claim 3 or 4, wherein, when the ratio of the number of subbands constituting the BWP to the number of subbands through which the CSI-RS is received is an integer, the generating of the channel information further comprises:

   selecting a frequency domain (FD) basis corresponding to a reception area of the CSI-RS, based on the second compressed data; and
   mapping the FD basis to correspond to the BWP area.

6. The method of claim 5, wherein the mapping of the FD basis further comprises:

   calculating a value by adding the rotation index to the FD basis which is multiplied by the ratio of the number of subbands constituting the BWP to the number of subbands through which the CSI-RS is received; and
   mapping the value to a FD basis corresponding to the BWP area.

7. The method of claim 5 or 6, wherein, when the ratio of the number of subbands constituting the BWP to the number of subbands through which the CSI-RS is received is an integer, the generating of the channel information further comprises:

   selecting non-zero coefficients (NZC), based on a matrix composed of column vectors corresponding to the first compressed data and the FD basis; and
   mapping the NZC to correspond to the BWP area.

8. The method of claim 7, wherein the selecting of the NZC comprises selecting the NZC, based on absolute values of elements included in a matrix composed of a column vector corresponding to the first compressed data and the FD basis.

9. The method of claim 1, wherein, when the ratio of the number of subbands constituting the BWP to the number of subbands through which the CSI-RS is received is not an integer, the generating of the second compressed data comprises:

   generating a fourth DFT function by applying a position indication matrix of the CSI-RS to the first DFT function; and
   generating the second compressed data by compressing the first compressed data in the frequency domain using the fourth DFT function.

10. An operating method of a wireless communication device, the method comprising:

   receiving a channel state information reference signal (CSI-RS) from a base station;
   generating channel information by estimating a channel between the wireless communication device and the base station, based on the CSI-RS; and
   reporting the channel information to the base station,
   wherein the generating of the channel information comprises:

      generating first compressed data by compressing, in a spatial domain, channel characteristic information of a subband in which the CSI-RS is received;
generating second compressed data by compressing the first compressed data in a frequency domain using a first partial Discrete Fourier transform (DFT) function composed of a column domain corresponding to a subband constituting a bandwidth part (BWP) for communication with the base station and a row domain corresponding to a subband in which the CSI-RS is received; and
generating the channel information, based on the second compressed data.

**11.** The method of claim 10, wherein the generating of the second compressed data comprises, when bitmap information indicating a subband of interest of the base station is received from the base station, generating the second compressed data by compressing the first compressed data in the frequency domain using a second partial DFT function composed of a column domain corresponding to an area of the subband constituting the BWP and a row domain corresponding to the subband of interest.

**12.** An operating method of a wireless communication device, the method comprising:

receiving a channel state information reference signal (CSI-RS) from a base station;
generating channel information by estimating a channel between the wireless communication device and the base station, based on the CSI-RS; and
reporting the channel information to the base station,
wherein the generating of the channel information comprises:

generating first compressed data by compressing, in a spatial domain, channel characteristic information of a subband in which the CSI-RS is received;
performing pre-processing of the first compressed data with respect to a subband in which the CSI-RS is not received among subbands of a bandwidth part (BWP) for communication with the base station, according to a preset method;
generating second compressed data by compressing the pre-processed first compressed data in a frequency domain by using a Discrete Fourier transform (DFT) function having a size corresponding to a number of subbands constituting the BWP; and
generating the channel information, based on the second compressed data.

**13.** The method of claim 12, wherein the pre-processing of the first compressed data comprises:

using a first pre-processing method for padding, with a preset certain value, a subband in which the CSI-RS is not received among the subbands of the BWP, or
using a second pre-processing method for performing linear interpolation on a subband in which the CSI-RS is not received among the subbands of the BWP, or
using a third pre-processing method for performing linear interpolation and phase difference rotation on a subband in which the CSI-RS is not received among the subbands of the BWP.

**14.** The method of claim 12, wherein the pre-processing of the first compressed data comprises:

calculating, based on the CSI-RS, an average value of precoding vectors of subbands in which the CSI-RS is received among the subbands of the BWP; and
using a fourth pre-processing method for performing linear interpolation based on the average value of the precoding vectors.

**15.** The method of claim 12, wherein the pre-processing of the first compressed data comprises:

using a fifth pre-processing method of mirror copying a subband in which the CSI-RS is not received, among the subbands of the BWP, into a precoding vector of a subband in which the CSI-RS is received, or
using a sixth pre-processing method of copying a subband in which the CSI-RS is not received, among the subbands of the BWP, to a precoding vector of a subband in which the CSI-RS is received, or
using a seventh pre-processing method in which a precoding vector of a subband in which the CSI-RS is received is copied to a subband in which the CSI-RS is not received, among the subbands of the BWP, and remaining subbands after the copying are padded with a preset certain value, or
using an eighth pre-processing method of copying an average value of precoding vectors of a subband in which the CSI-RS is received to the subband in which the CSI-RS is not received of the BWP.

FIG. 1

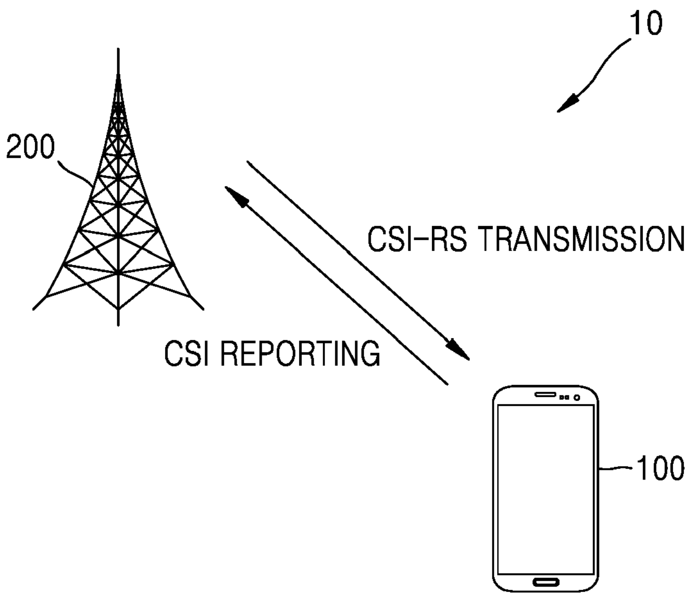

FIG. 2

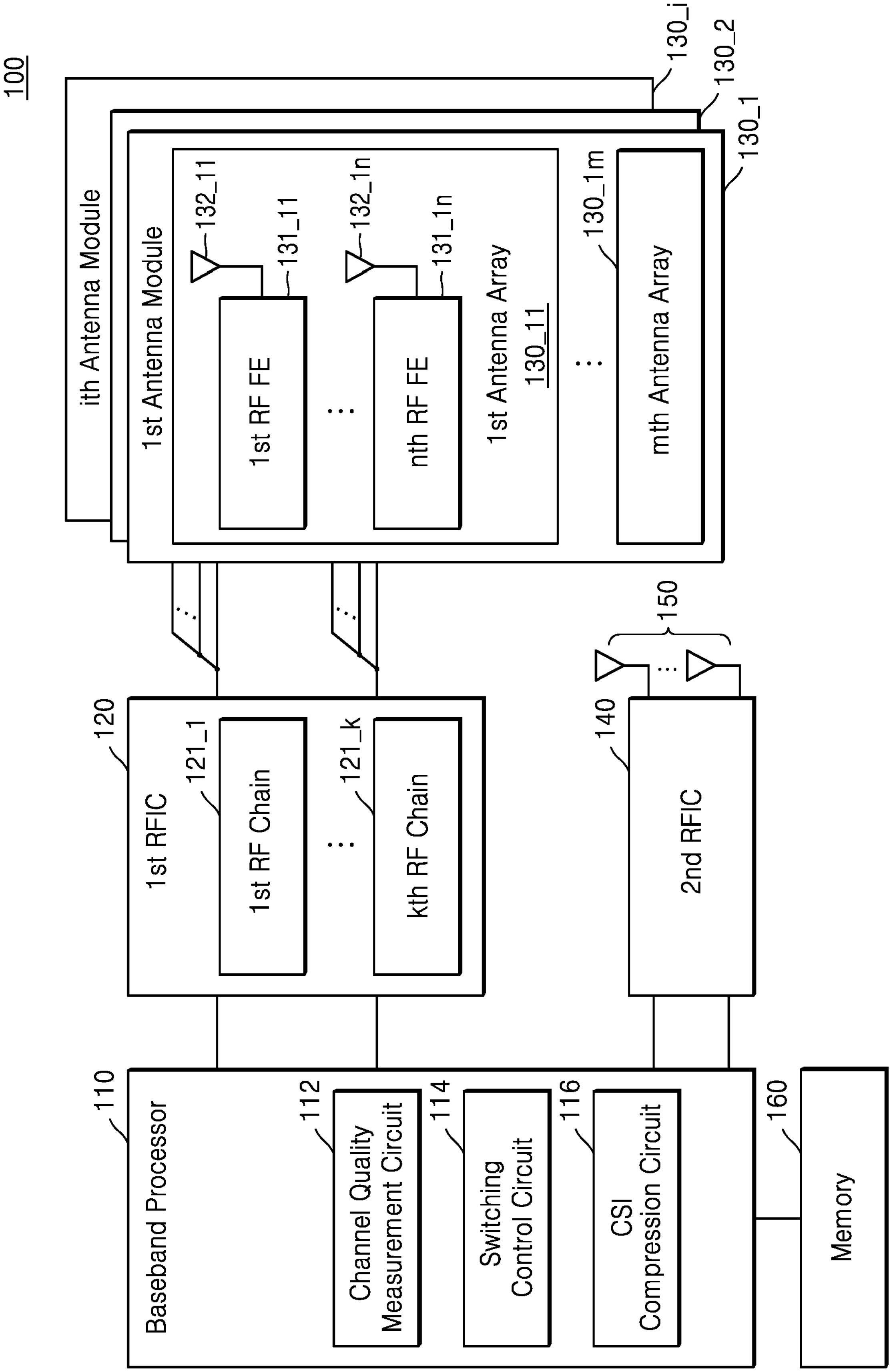

100
ith Antenna Module
1st Antenna Module
130_i
130_2
130_1
132_11
131_11
1st RF FE
132_1n
131_1n
nth RF FE
1st Antenna Array
130_11
130_1m
mth Antenna Array
120
1st RFIC
121_1
1st RF Chain
121_k
kth RF Chain
150
140
2nd RFIC
110
Baseband Processor
112
Channel Quality Measurement Circuit
114
Switching Control Circuit
116
CSI Compression Circuit
160
Memory

FIG. 3

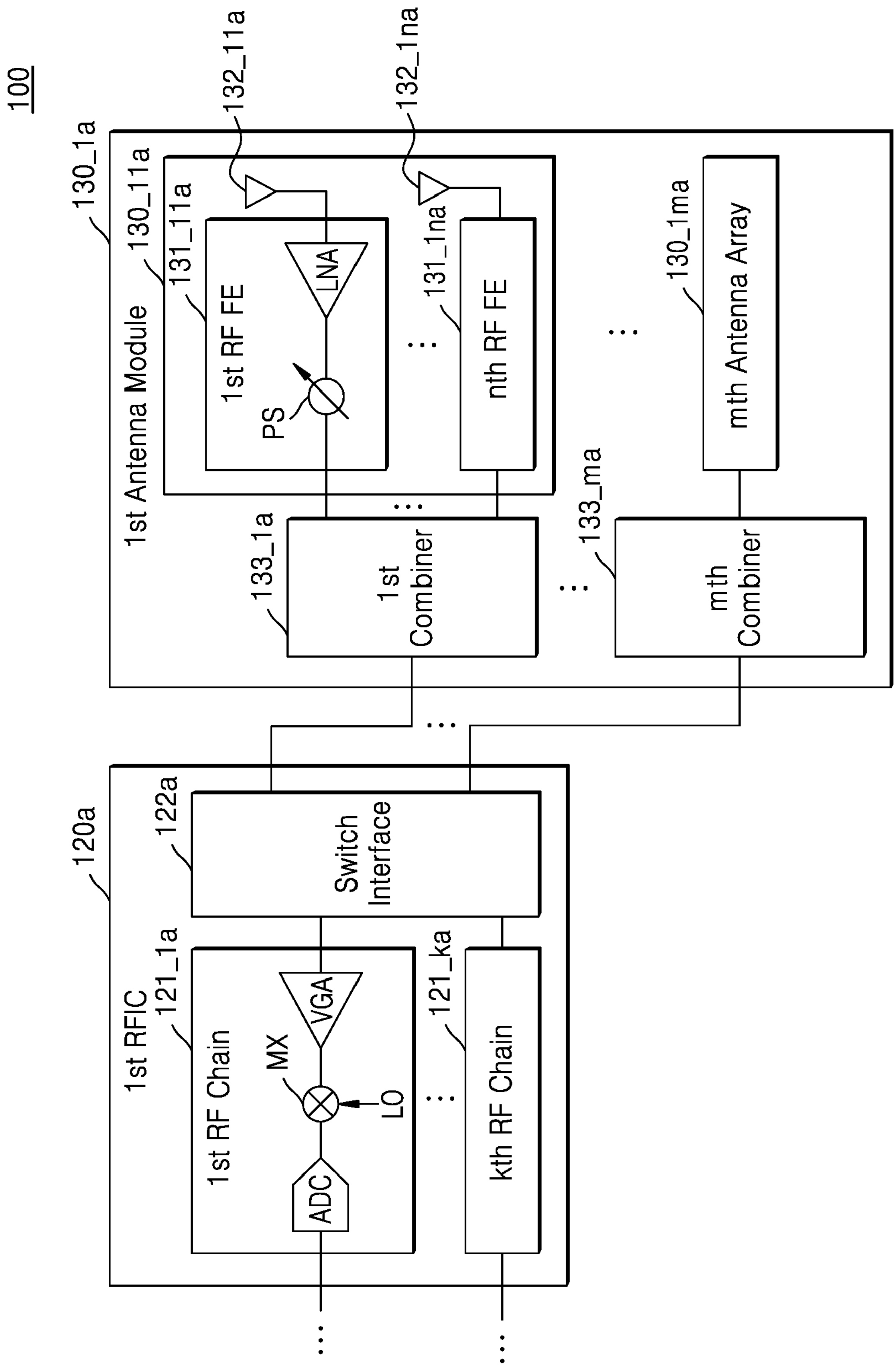
100
130_1a
1st Antenna Module
130_11a
131_11a
1st RF FE
LNA
PS
132_11a
132_1na
131_1na
nth RF FE
130_1ma
mth Antenna Array
133_1a
1st Combiner
133_ma
mth Combiner
120a
1st RFIC
121_1a
1st RF Chain
ADC
MX
LO
VGA
121_ka
kth RF Chain
122a
Switch Interface

FIG. 4

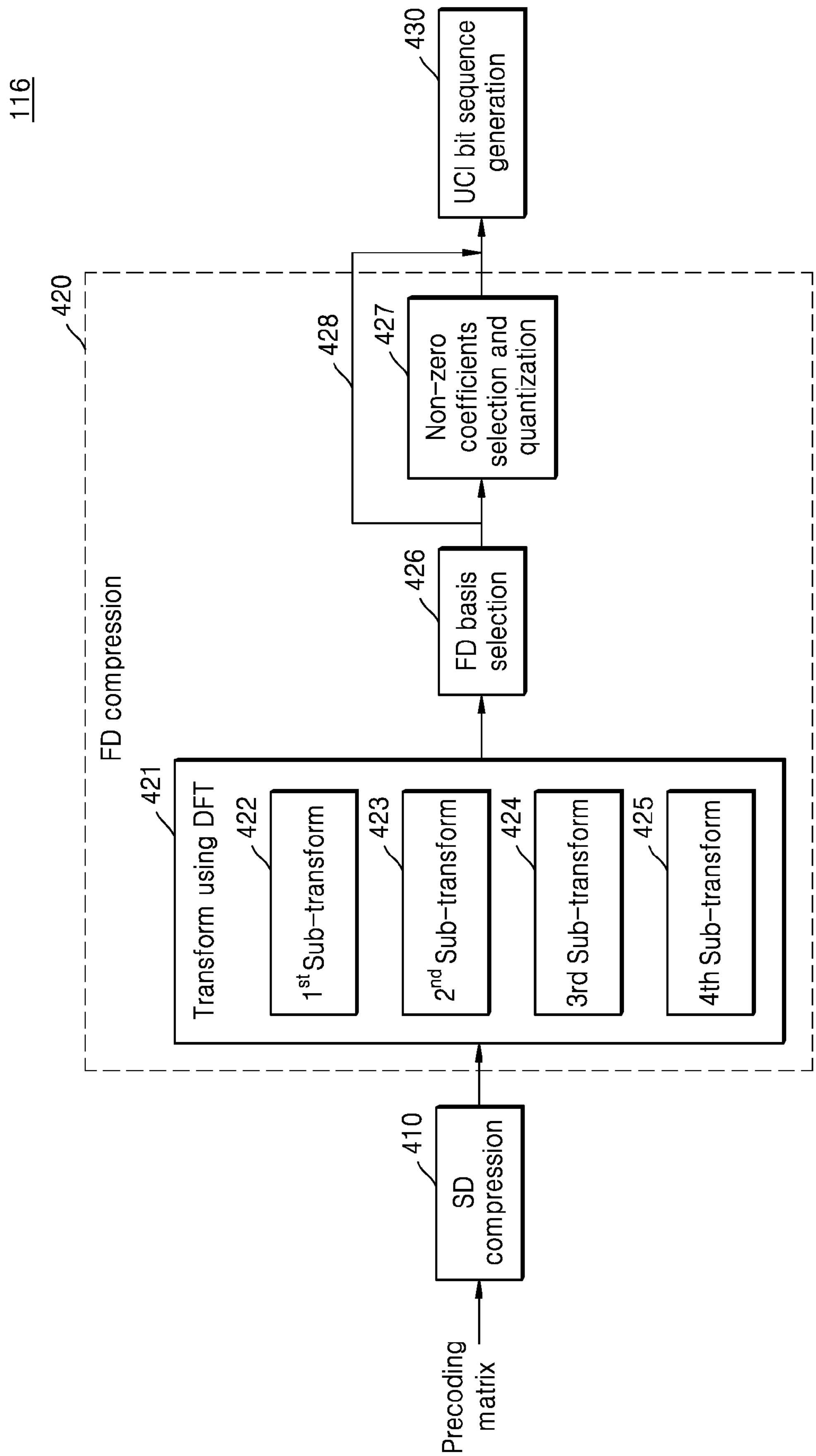
116
Precoding matrix
410
SD compression
420
FD compression
421
Transform using DFT
422
1st Sub-transform
423
2nd Sub-transform
424
3rd Sub-transform
425
4th Sub-transform
426
FD basis selection
428
427
Non-zero coefficients selection and quantization
430
UCI bit sequence generation

FIG. 5

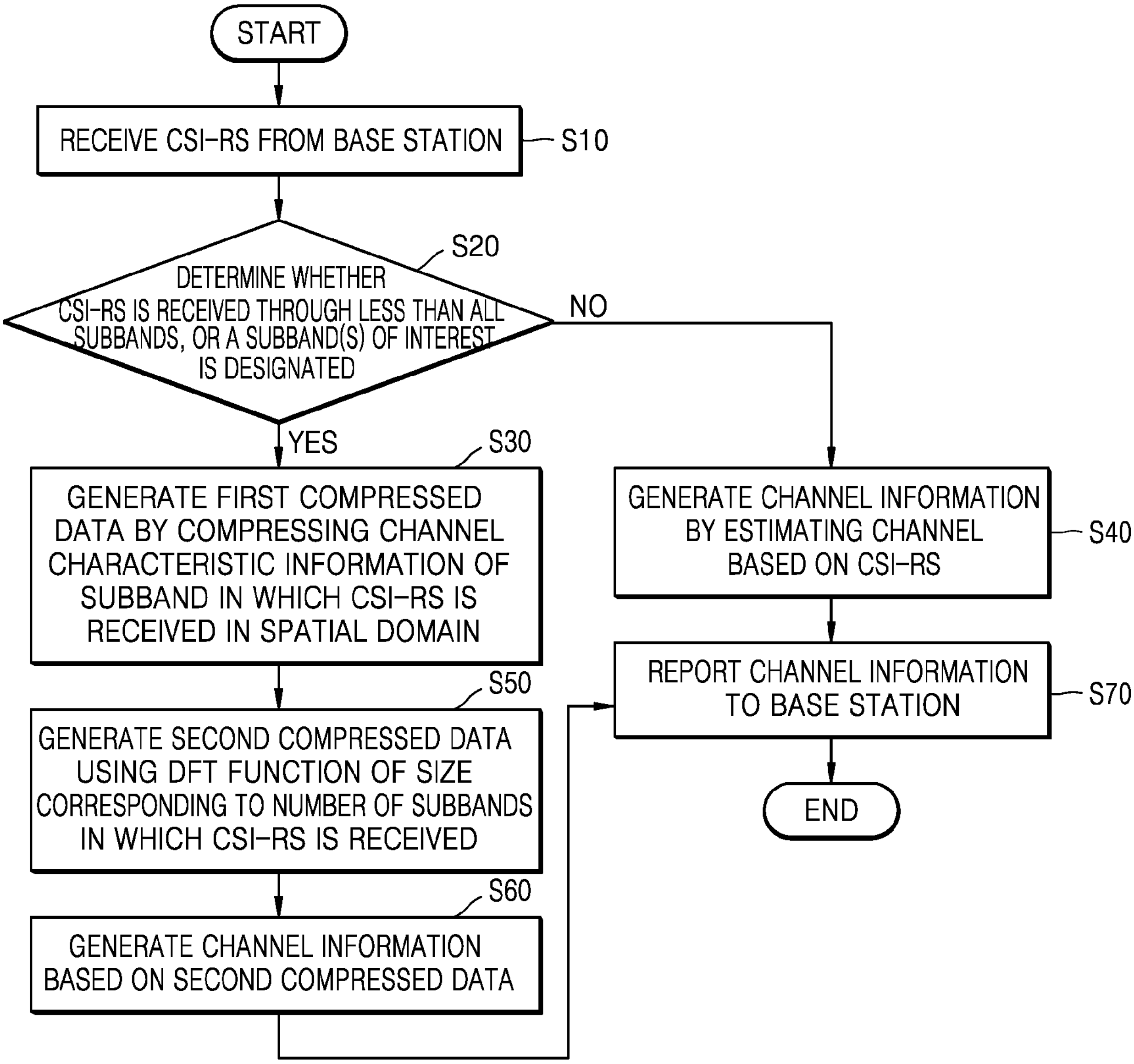
START
RECEIVE CSI-RS FROM BASE STATION
S10
S20
DETERMINE WHETHER CSI-RS IS RECEIVED THROUGH LESS THAN ALL SUBBANDS, OR A SUBBAND(S) OF INTEREST IS DESIGNATED
NO
YES
S30
GENERATE FIRST COMPRESSED DATA BY COMPRESSING CHANNEL CHARACTERISTIC INFORMATION OF SUBBAND IN WHICH CSI-RS IS RECEIVED IN SPATIAL DOMAIN
S50
GENERATE SECOND COMPRESSED DATA USING DFT FUNCTION OF SIZE CORRESPONDING TO NUMBER OF SUBBANDS IN WHICH CSI-RS IS RECEIVED
S60
GENERATE CHANNEL INFORMATION BASED ON SECOND COMPRESSED DATA
GENERATE CHANNEL INFORMATION BY ESTIMATING CHANNEL BASED ON CSI-RS
S40
REPORT CHANNEL INFORMATION TO BASE STATION
S70
END

FIG. 6A

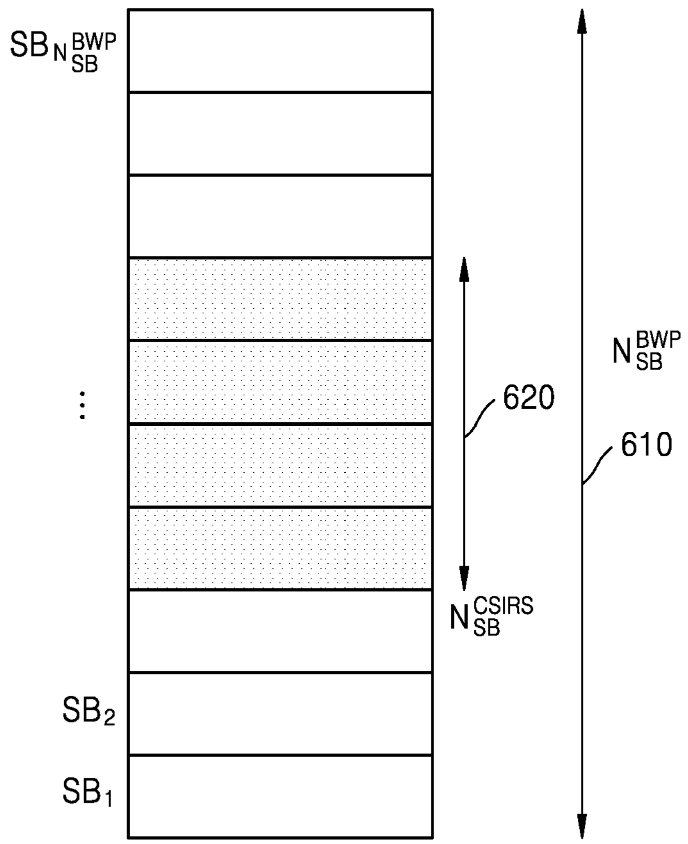

FIG. 6B

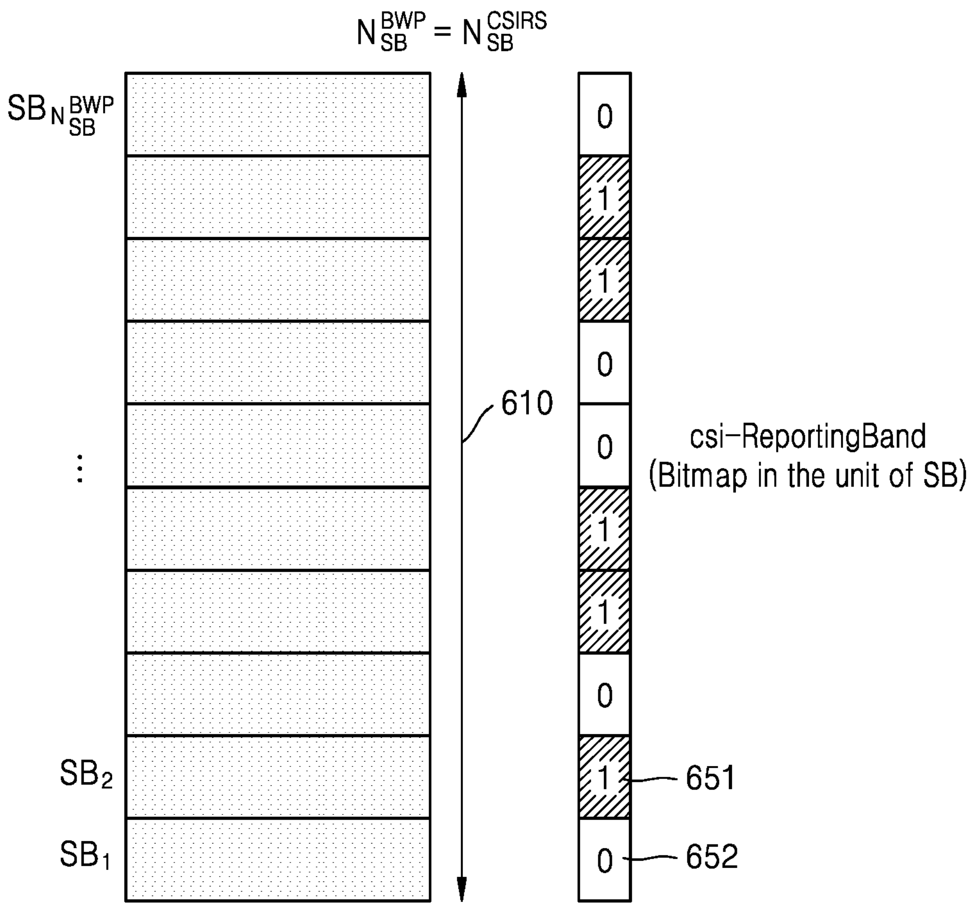
$N_{SB}^{BWP} = N_{SB}^{CSIRS}$
$SB_{N_{SB}^{BWP}}$
⋮
$SB_2$
$SB_1$
610
0
1
1
0
0
1
1
0
1
0
csi-ReportingBand
(Bitmap in the unit of SB)
651
652

# FIG. 7

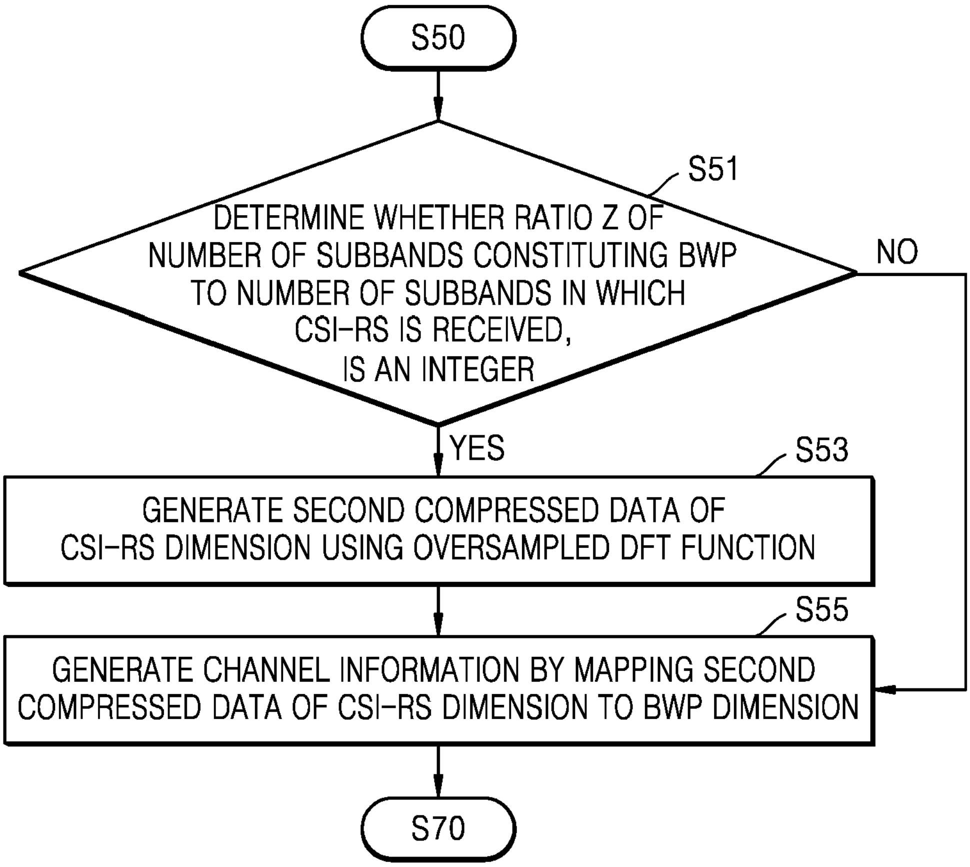
S50
S51
DETERMINE WHETHER RATIO Z OF NUMBER OF SUBBANDS CONSTITUTING BWP TO NUMBER OF SUBBANDS IN WHICH CSI-RS IS RECEIVED, IS AN INTEGER
NO
YES
S53
GENERATE SECOND COMPRESSED DATA OF CSI-RS DIMENSION USING OVERSAMPLED DFT FUNCTION
S55
GENERATE CHANNEL INFORMATION BY MAPPING SECOND COMPRESSED DATA OF CSI-RS DIMENSION TO BWP DIMENSION
S70

# FIG. 8A

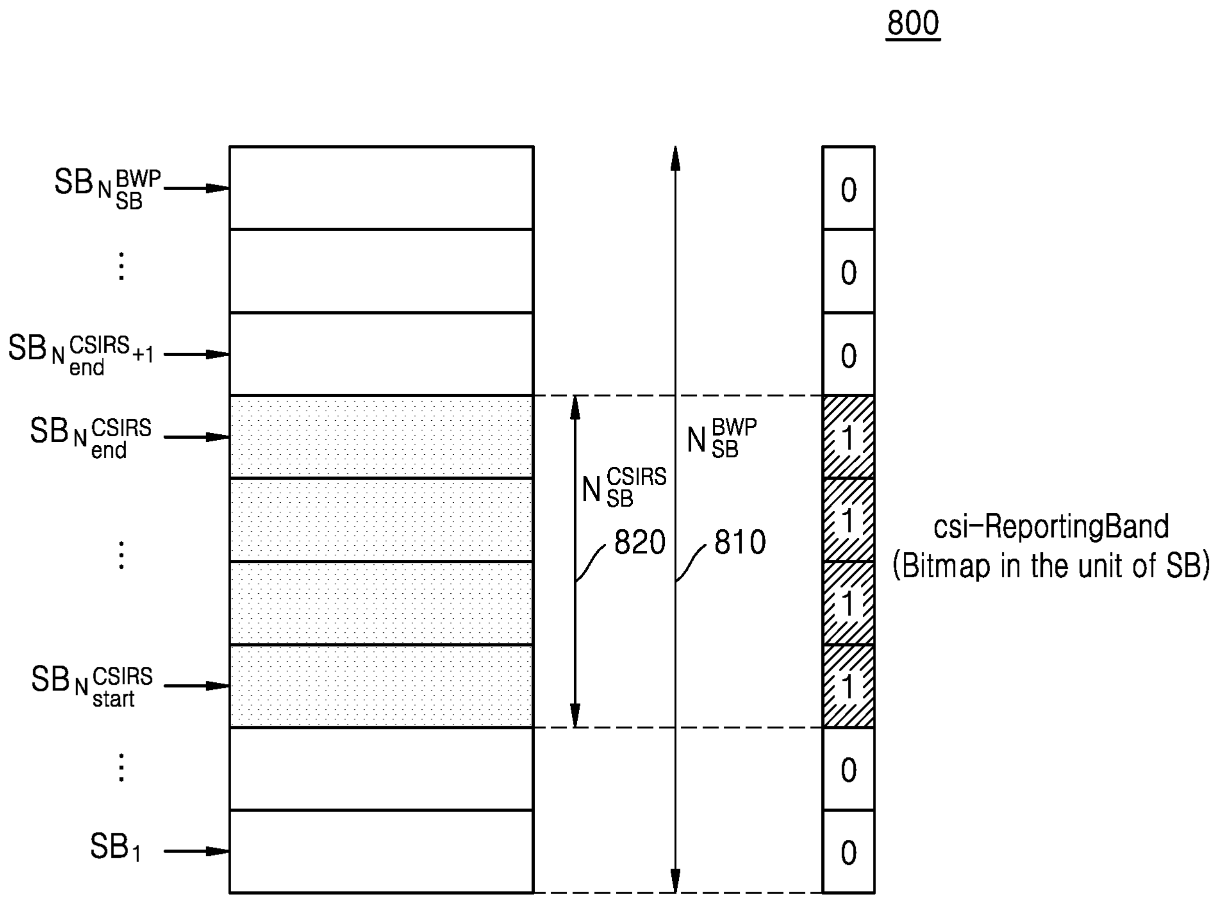
800
$SB_{N_{SB}^{BWP}}$
$SB_{N_{end}^{CSIRS}+1}$
$SB_{N_{end}^{CSIRS}}$
$SB_{N_{start}^{CSIRS}}$
$SB_1$
$N_{SB}^{CSIRS}$
$N_{SB}^{BWP}$
820
810
0
0
0
1
1
1
1
0
0
csi-ReportingBand
(Bitmap in the unit of SB)

FIG. 8B

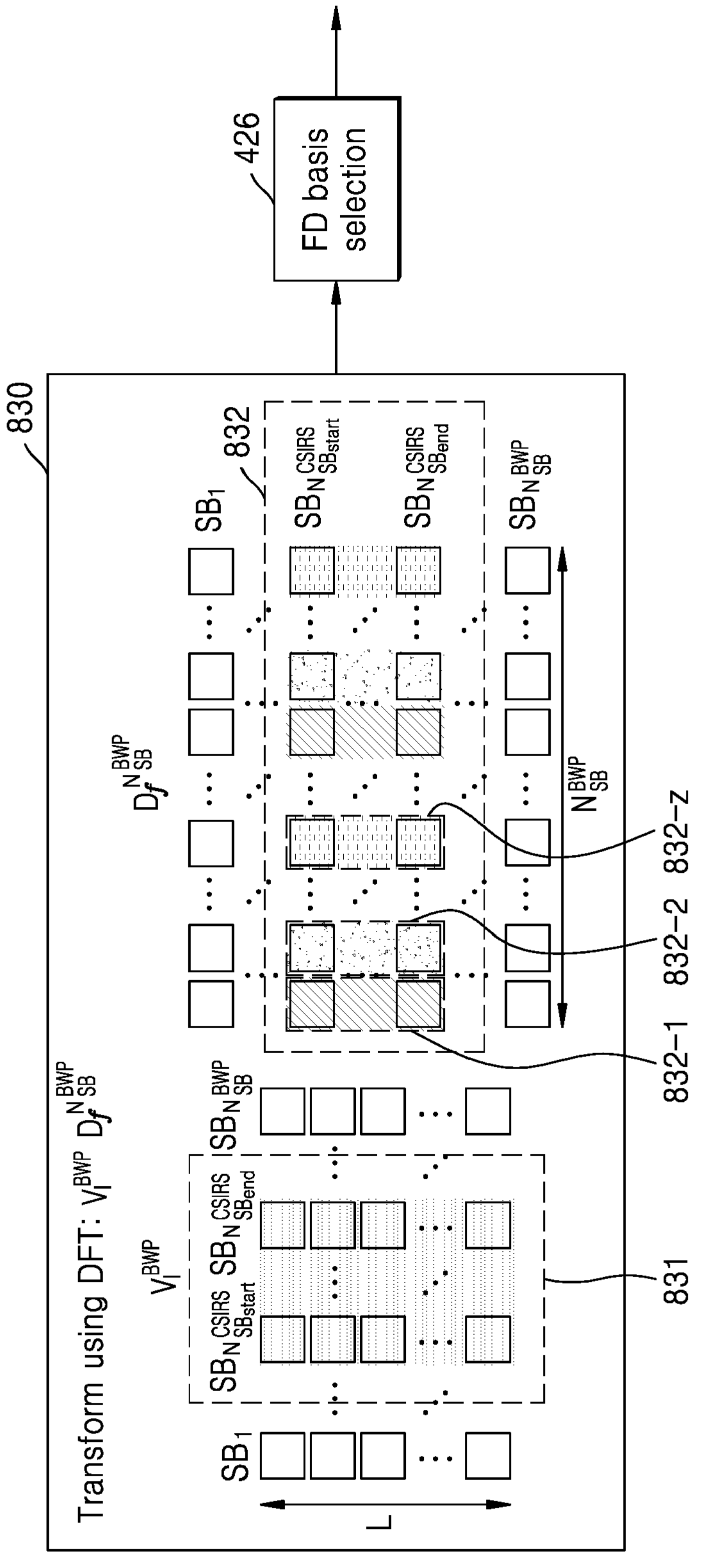
426
FD basis selection
830
Transform using DFT: $V_l^{BWP} D_f^{N_{SB}^{BWP}}$
$V_l^{BWP}$
$SB_1$
$SB_{N_{SBstart}^{CSIRS}}$
$SB_{N_{SBend}^{CSIRS}}$
$SB_{N_{SB}^{BWP}}$
L
831
$D_f^{N_{SB}^{BWP}}$
832
$N_{SB}^{BWP}$
832-1
832-2
832-z

FIG. 8C

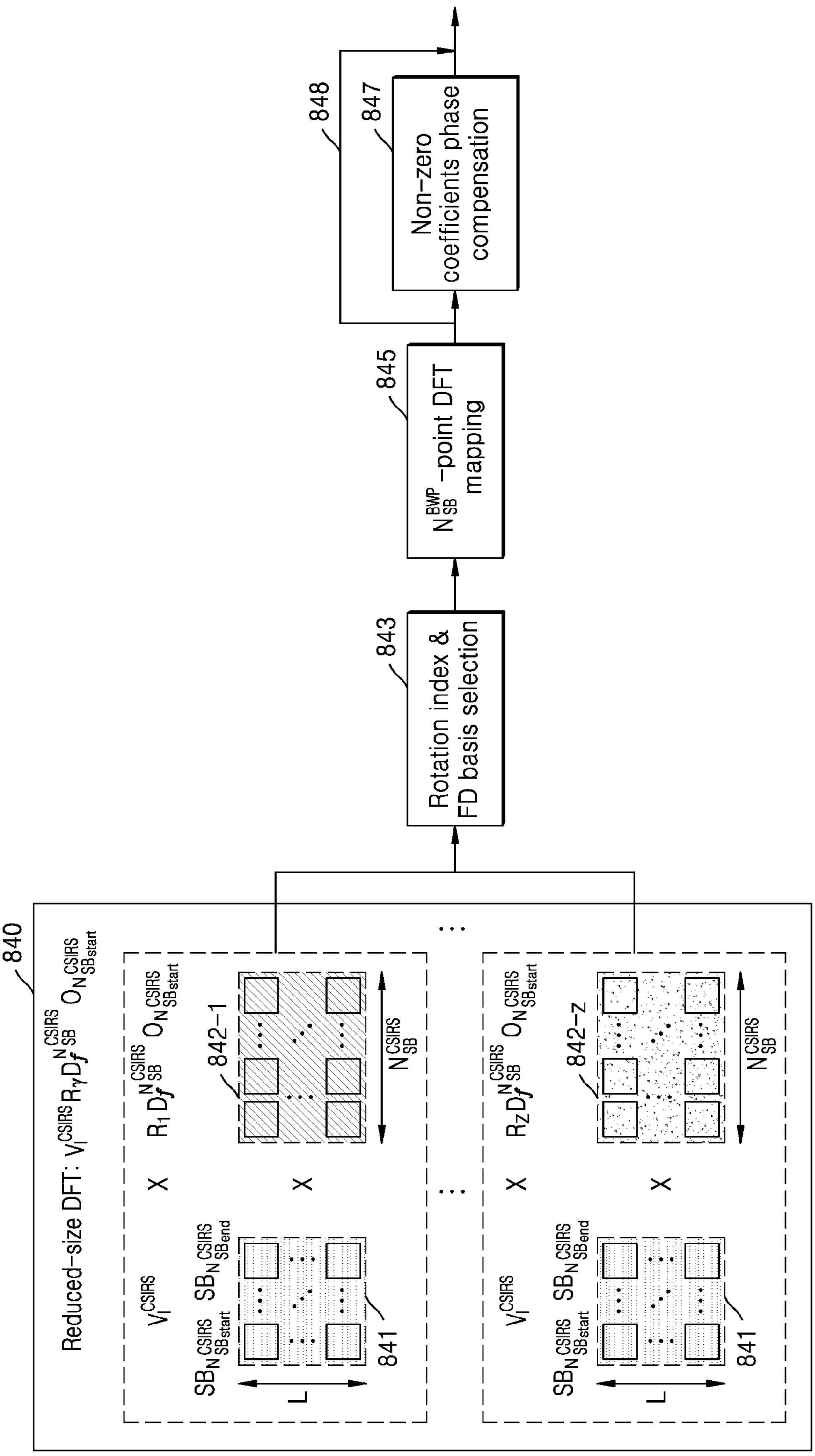

840
Reduced-size DFT: $V_l^{CSIRS} R_\gamma D_f^{N_{SB}^{CSIRS}} O_{N_{SB_{start}}^{CSIRS}}$
$V_l^{CSIRS}$
$SB_{N_{SB_{start}}^{CSIRS}}$ $SB_{N_{SB_{end}}^{CSIRS}}$
$R_1 D_f^{N_{SB}^{CSIRS}} O_{N_{SB_{start}}^{CSIRS}}$
$R_Z D_f^{N_{SB}^{CSIRS}} O_{N_{SB_{start}}^{CSIRS}}$
841
842-1
842-Z
L
$N_{SB}^{CSIRS}$
843
Rotation index & FD basis selection
845
$N_{SB}^{BWP}$-point DFT mapping
847
848
Non-zero coefficients phase compensation

FIG. 8D

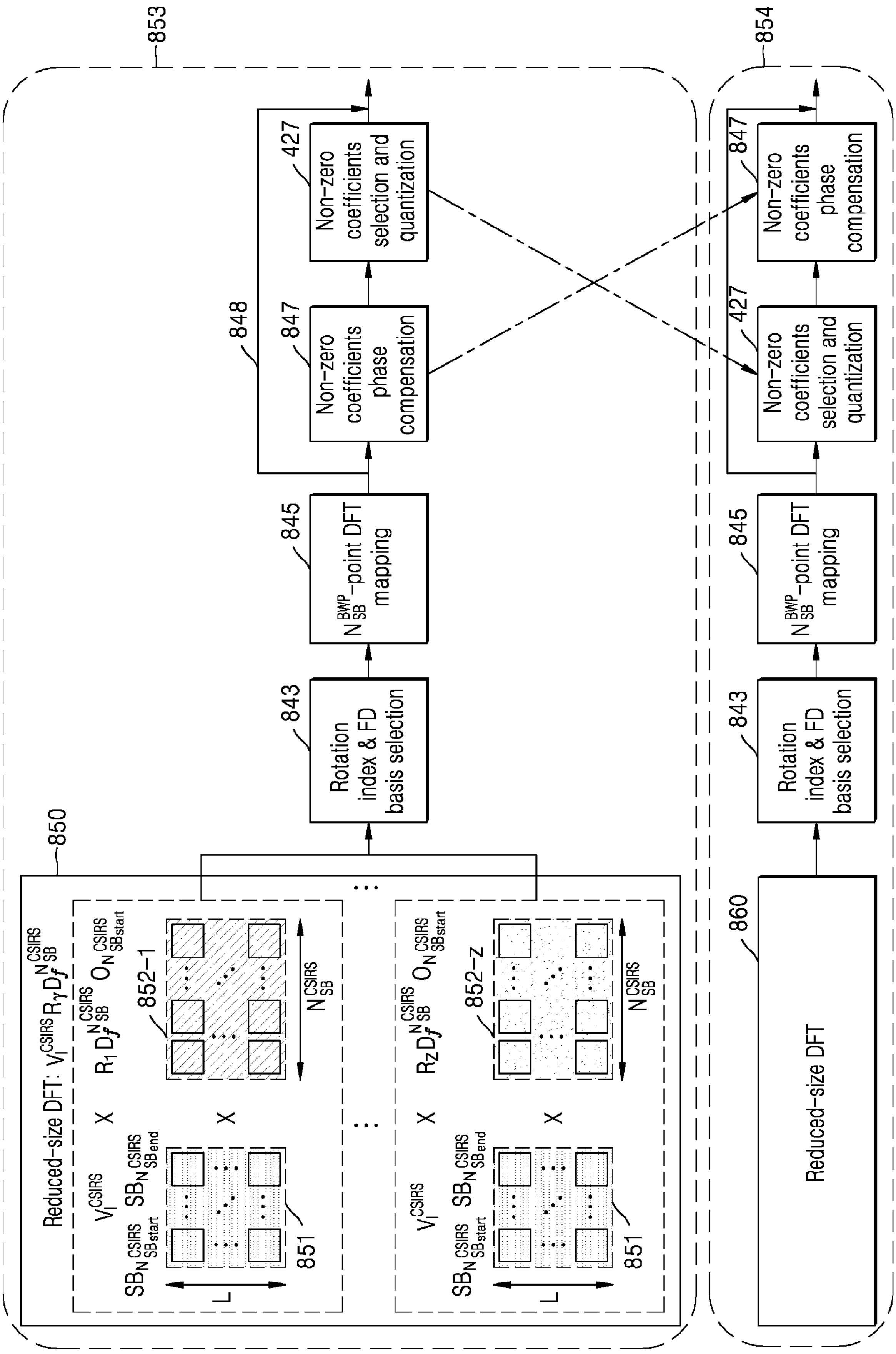
853
854
850
Reduced-size DFT
851
852-1
852-z
L
843
Rotation index & FD basis selection
845
-point DFT mapping
847
Non-zero coefficients phase compensation
427
Non-zero coefficients selection and quantization
848
860
Reduced-size DFT

FIG. 8E

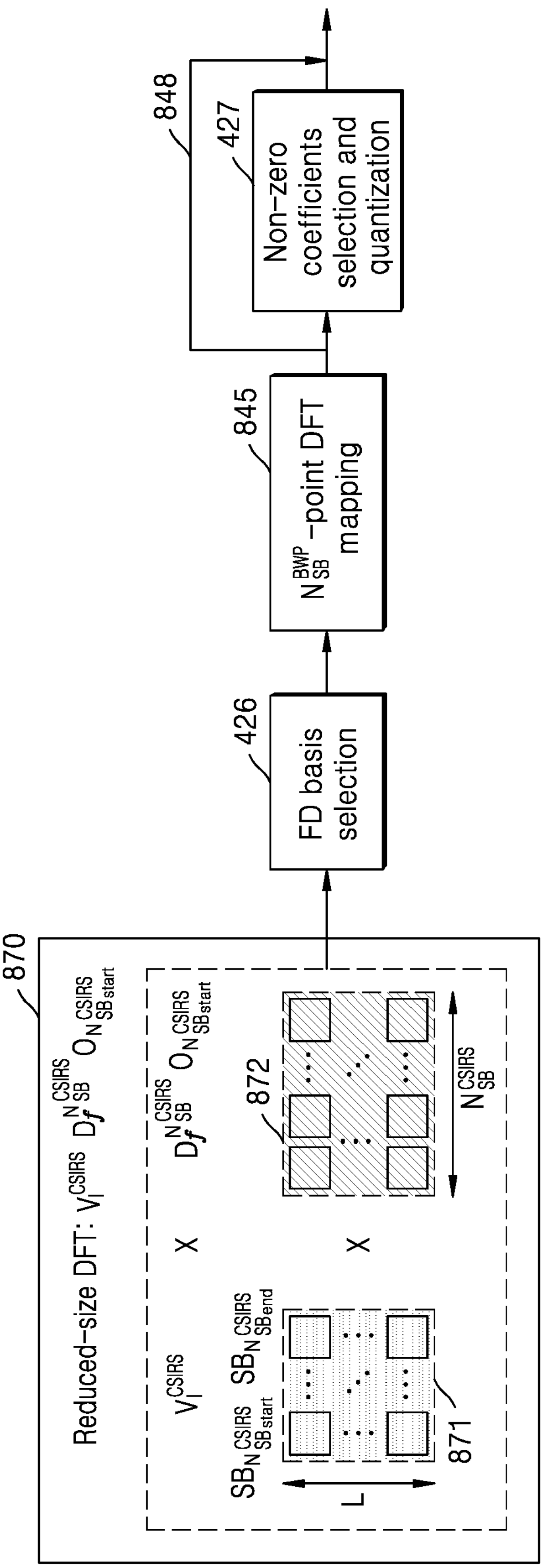
870
Reduced-size DFT:
871
872
L
FD basis selection
426
-point DFT mapping
845
Non-zero coefficients selection and quantization
427
848

FIG. 9

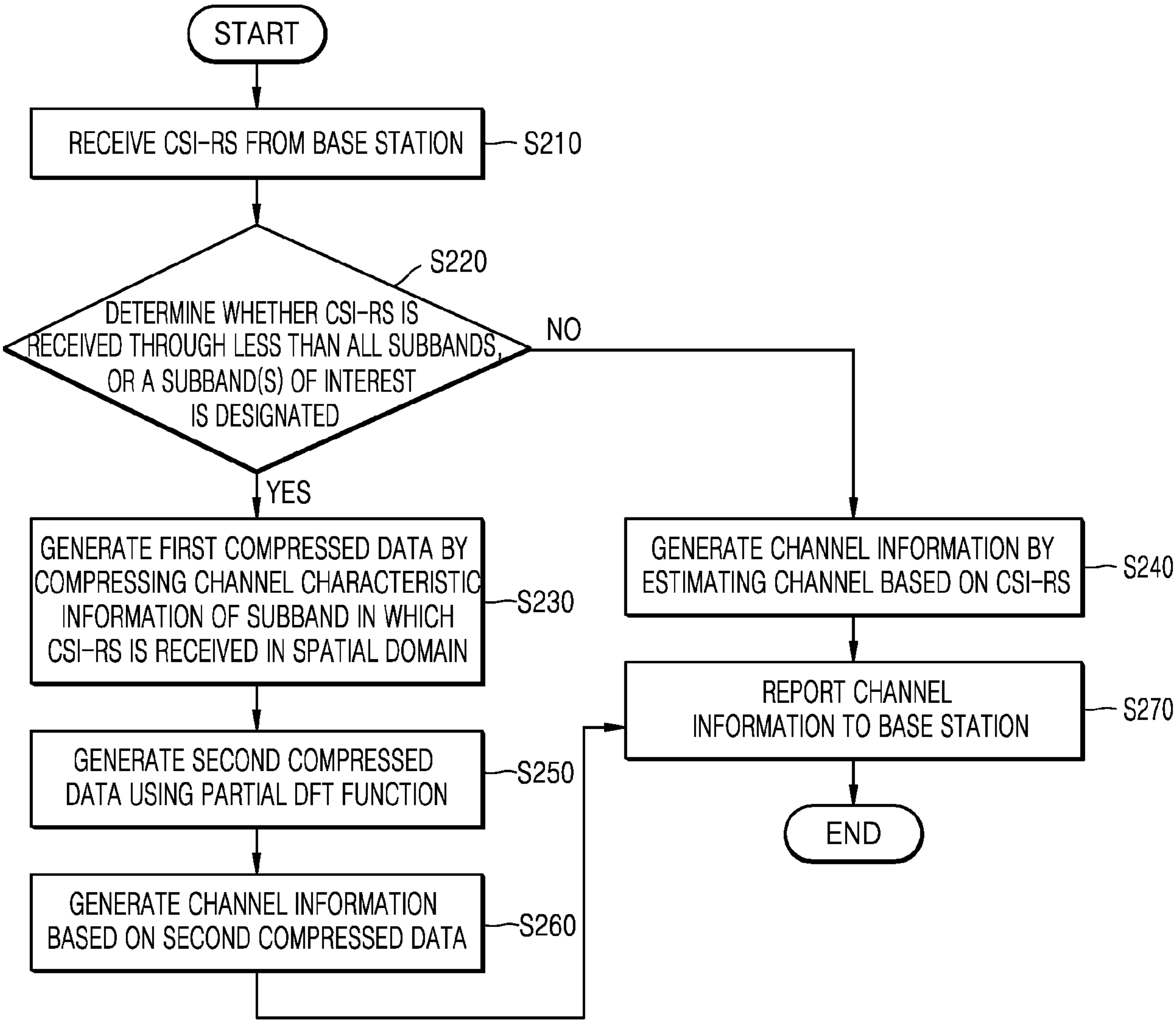
START
RECEIVE CSI-RS FROM BASE STATION
S210
S220
DETERMINE WHETHER CSI-RS IS RECEIVED THROUGH LESS THAN ALL SUBBANDS, OR A SUBBAND(S) OF INTEREST IS DESIGNATED
NO
YES
GENERATE FIRST COMPRESSED DATA BY COMPRESSING CHANNEL CHARACTERISTIC INFORMATION OF SUBBAND IN WHICH CSI-RS IS RECEIVED IN SPATIAL DOMAIN
S230
GENERATE CHANNEL INFORMATION BY ESTIMATING CHANNEL BASED ON CSI-RS
S240
REPORT CHANNEL INFORMATION TO BASE STATION
S270
GENERATE SECOND COMPRESSED DATA USING PARTIAL DFT FUNCTION
S250
END
GENERATE CHANNEL INFORMATION BASED ON SECOND COMPRESSED DATA
S260

# FIG. 10A

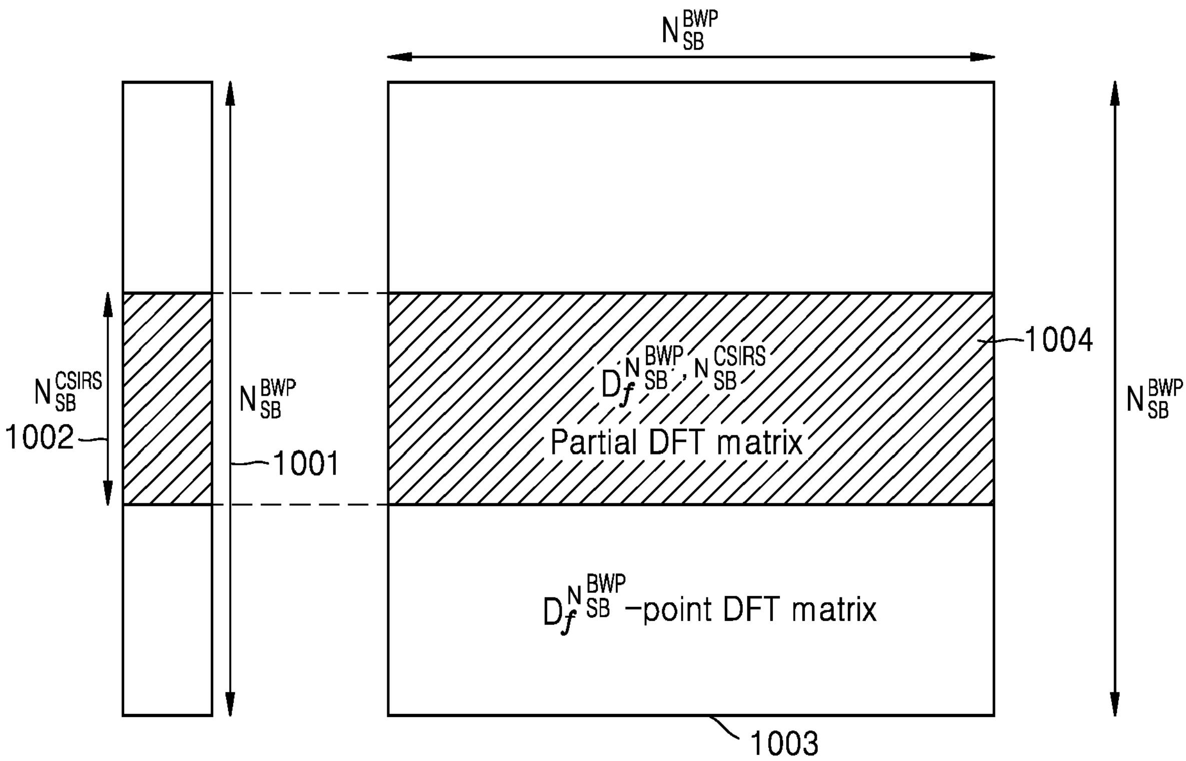
$N_{SB}^{BWP}$
$N_{SB}^{CSIRS}$
1002
$N_{SB}^{BWP}$
1001
$D_f^{N_{SB}^{BWP}, N_{SB}^{CSIRS}}$
Partial DFT matrix
1004
$D_f^{N_{SB}^{BWP}}$ -point DFT matrix
$N_{SB}^{BWP}$
1003

FIG. 10B

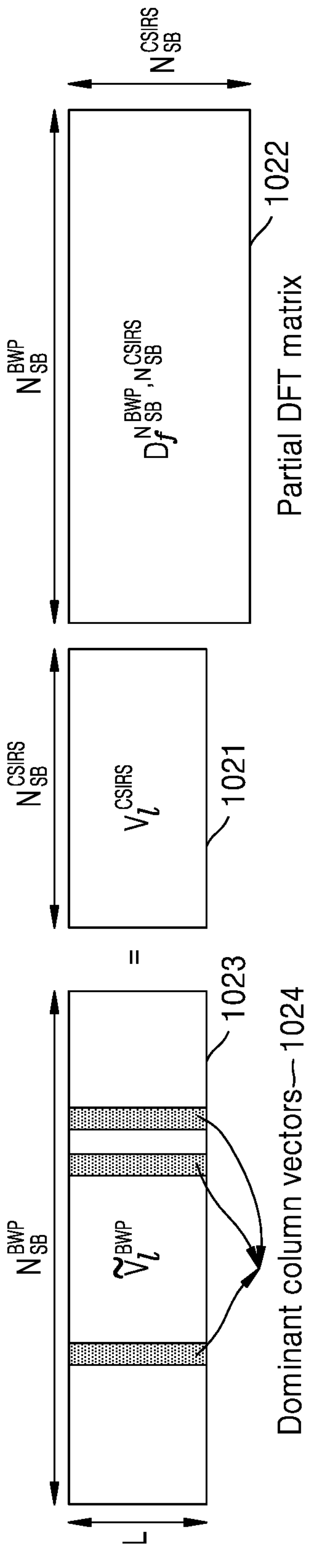
$N_{SB}^{BWP}$
$\tilde{V}_{l}^{BWP}$
L
Dominant column vectors
1024
1023
=
$N_{SB}^{CSIRS}$
$V_{l}^{CSIRS}$
1021
$N_{SB}^{BWP}$
$D_{f}^{N_{SB}^{BWP}, N_{SB}^{CSIRS}}$
Partial DFT matrix
1022
$N_{SB}^{CSIRS}$

FIG. 10C

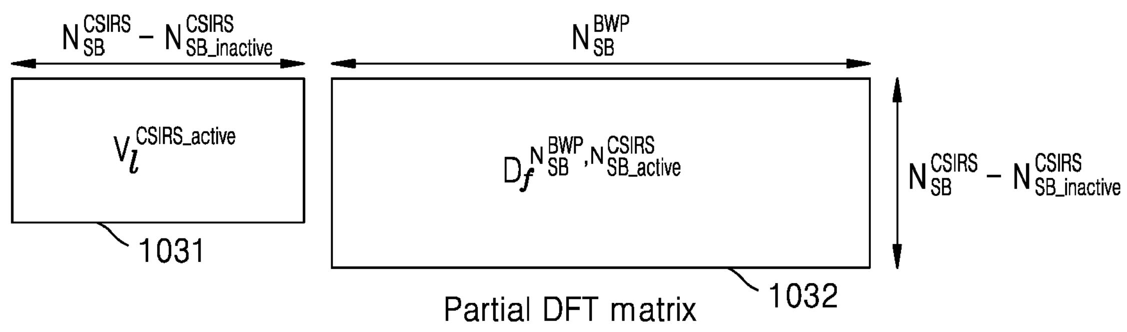
N SB CSIRS – N SB_inactive CSIRS
N SB BWP
V l CSIRS_active
D f N SB BWP, N SB_active CSIRS
N SB CSIRS – N SB_inactive CSIRS
1031
1032
Partial DFT matrix

FIG. 10D

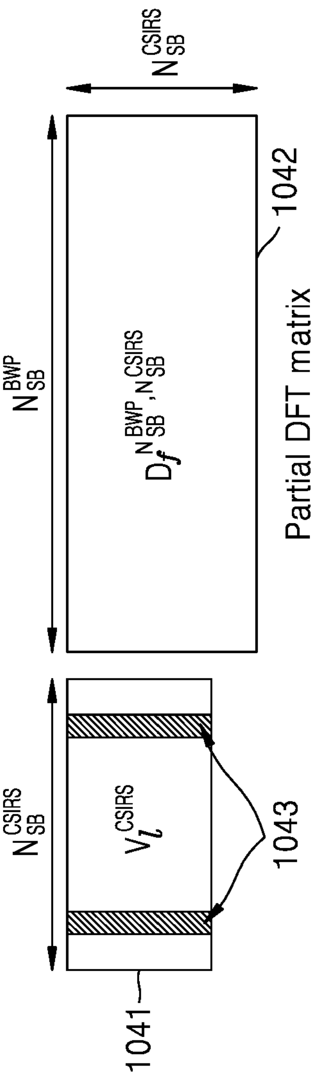

# FIG. 11

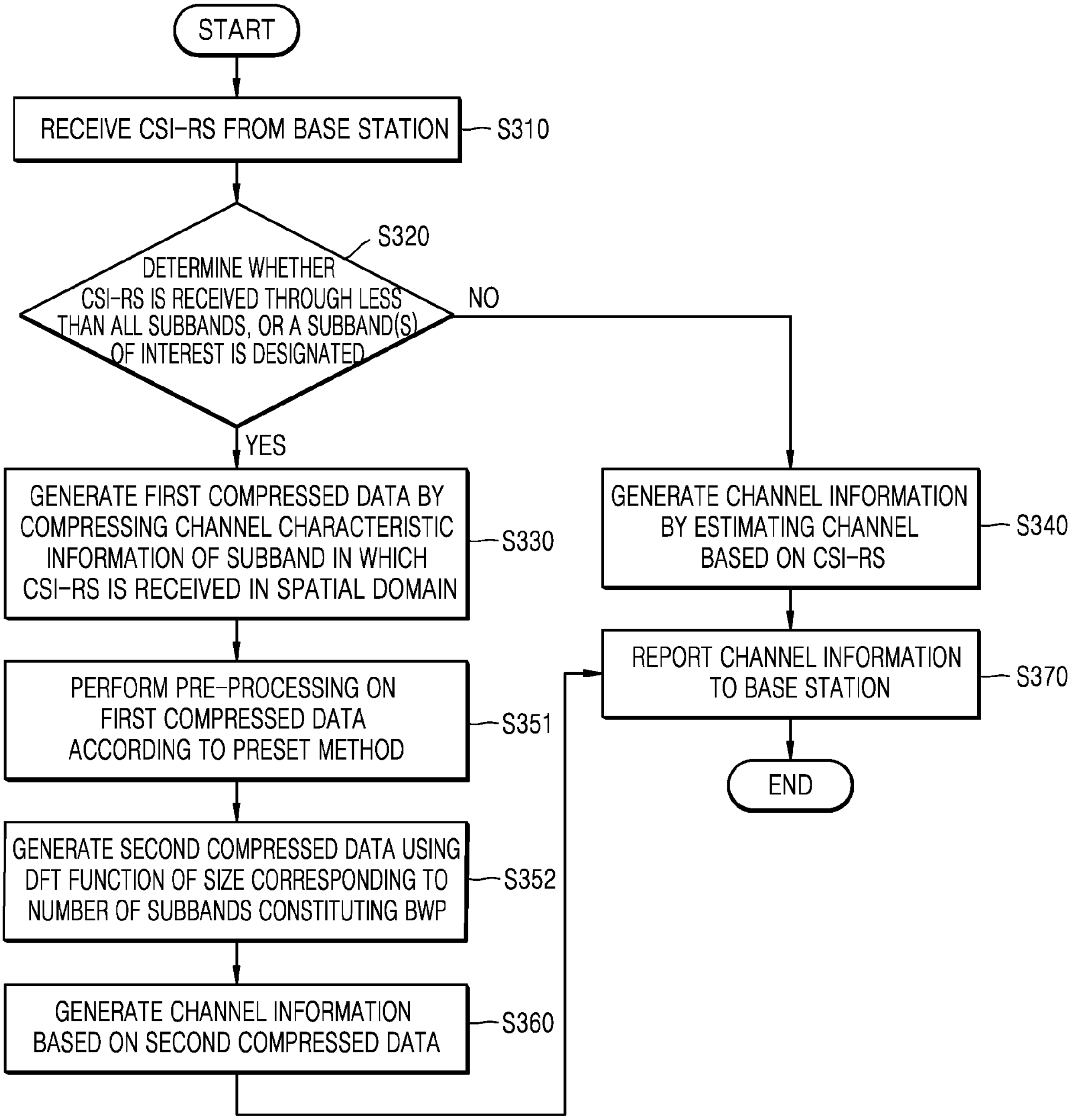
START
RECEIVE CSI-RS FROM BASE STATION
S310
S320
DETERMINE WHETHER CSI-RS IS RECEIVED THROUGH LESS THAN ALL SUBBANDS, OR A SUBBAND(S) OF INTEREST IS DESIGNATED
NO
YES
GENERATE FIRST COMPRESSED DATA BY COMPRESSING CHANNEL CHARACTERISTIC INFORMATION OF SUBBAND IN WHICH CSI-RS IS RECEIVED IN SPATIAL DOMAIN
S330
GENERATE CHANNEL INFORMATION BY ESTIMATING CHANNEL BASED ON CSI-RS
S340
PERFORM PRE-PROCESSING ON FIRST COMPRESSED DATA ACCORDING TO PRESET METHOD
S351
REPORT CHANNEL INFORMATION TO BASE STATION
S370
END
GENERATE SECOND COMPRESSED DATA USING DFT FUNCTION OF SIZE CORRESPONDING TO NUMBER OF SUBBANDS CONSTITUTING BWP
S352
GENERATE CHANNEL INFORMATION BASED ON SECOND COMPRESSED DATA
S360

FIG. 12A

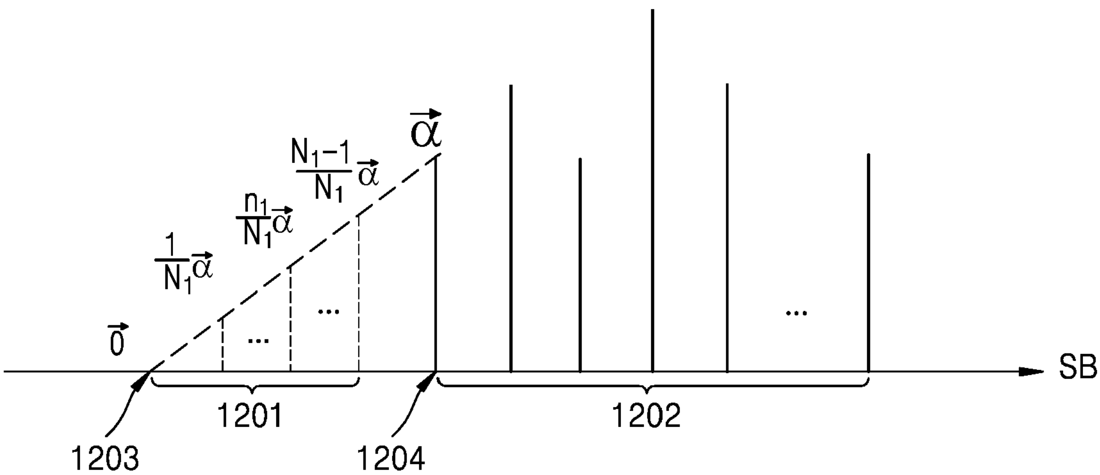

$\vec{\alpha}$
$\frac{N_1-1}{N_1}\vec{\alpha}$
$\frac{n_1}{N_1}\vec{\alpha}$
$\frac{1}{N_1}\vec{\alpha}$
$\vec{0}$
...
...
...
SB
1201
1202
1203
1204

FIG. 12B

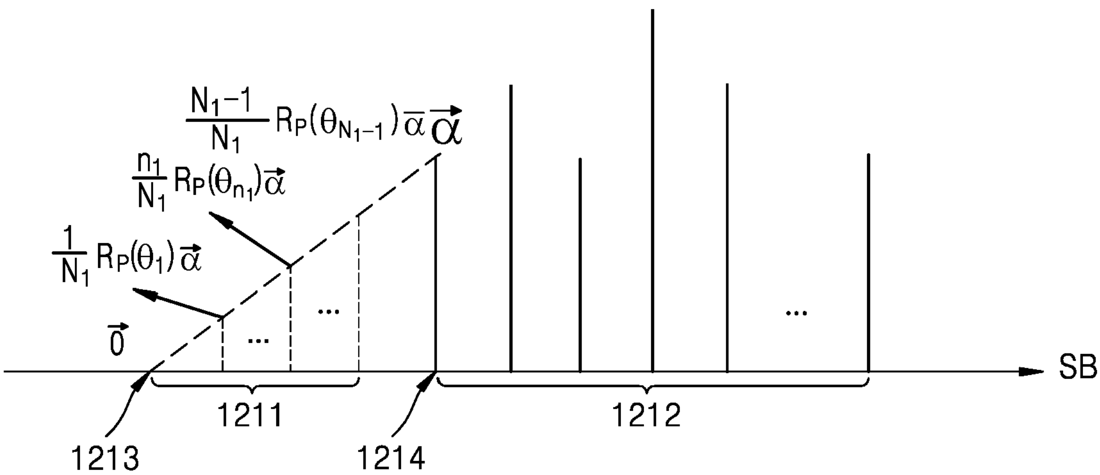
$\frac{N_1-1}{N_1}R_P(\theta_{N_1-1})\overline{\alpha}$
$\vec{\alpha}$
$\frac{n_1}{N_1}R_P(\theta_{n_1})\vec{\alpha}$
$\frac{1}{N_1}R_P(\theta_1)\vec{\alpha}$
$\vec{0}$
...
...
...
SB
1211
1212
1213
1214

FIG. 12C

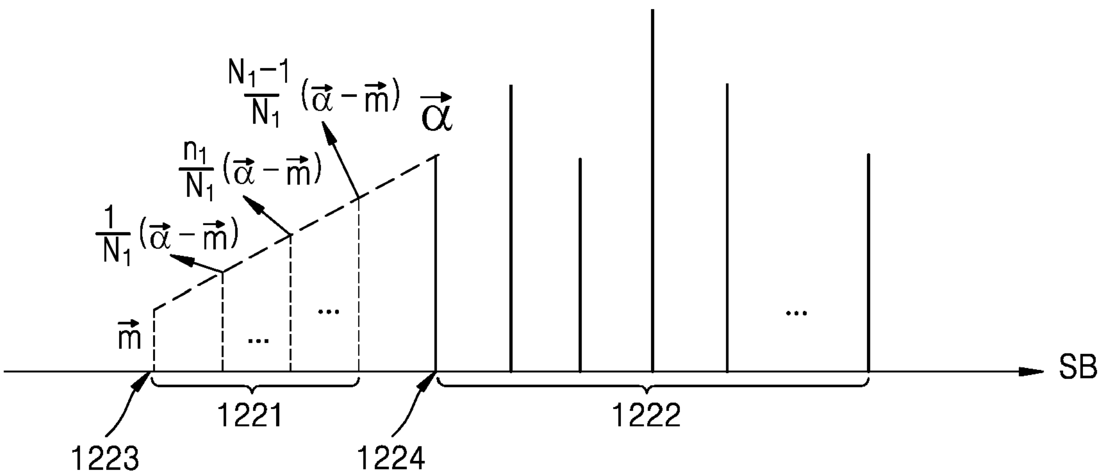

$\frac{N_1-1}{N_1}(\vec{\alpha}-\vec{m})$
$\vec{\alpha}$
$\frac{n_1}{N_1}(\vec{\alpha}-\vec{m})$
$\frac{1}{N_1}(\vec{\alpha}-\vec{m})$
$\vec{m}$
...
...
...
SB
1221
1222
1223
1224

FIG. 12D

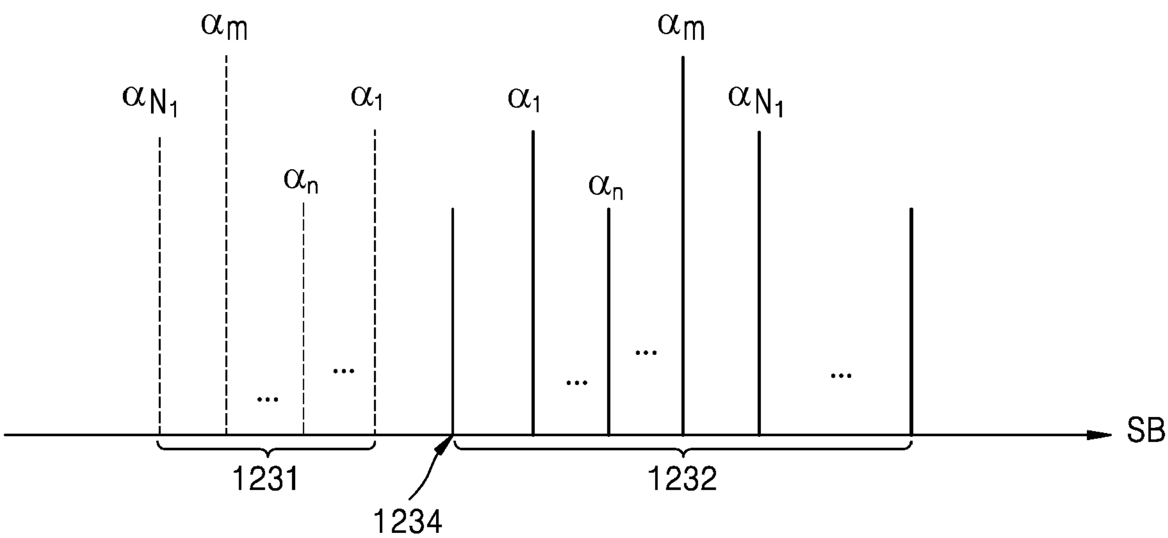

$\alpha_m$
$\alpha_{N_1}$
$\alpha_1$
$\alpha_n$
...
...
$\alpha_1$
$\alpha_m$
$\alpha_{N_1}$
$\alpha_n$
...
...
...
SB
1231
1232
1234

FIG. 12E

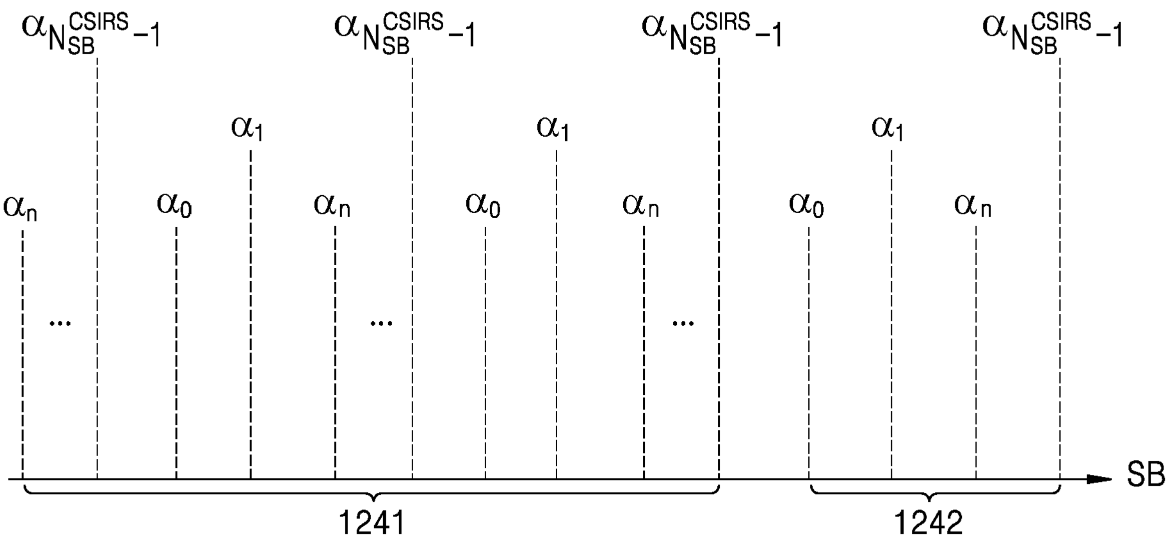

FIG. 12F

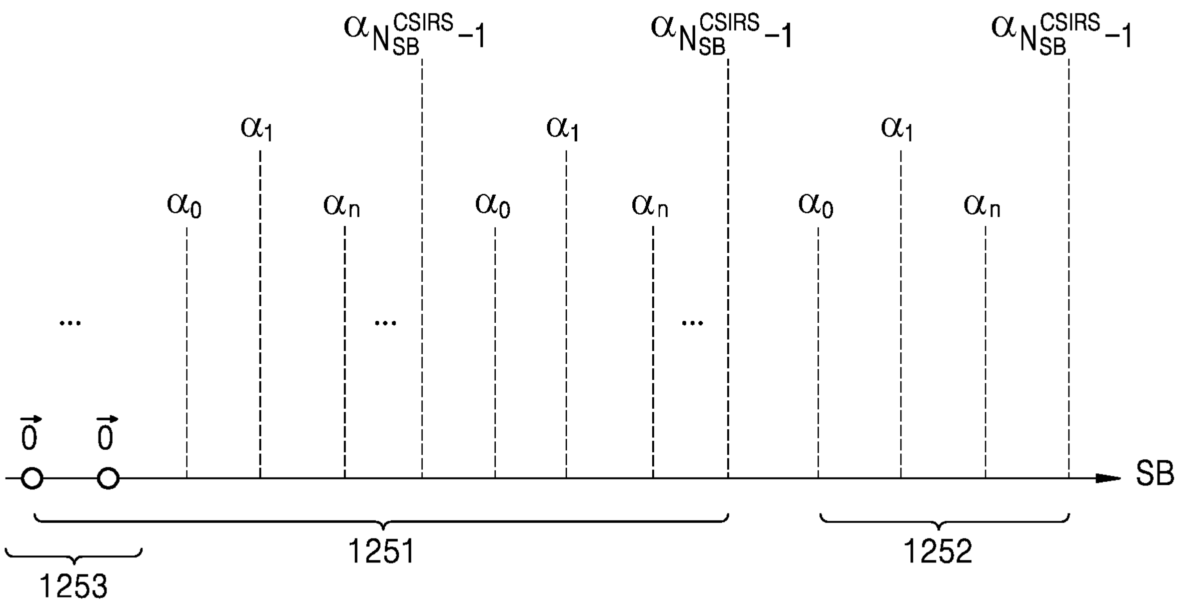
$\alpha_{N_{SB}^{CSIRS}-1}$
$\alpha_1$
$\alpha_0$
$\alpha_n$
...
$\vec{0}$
SB
1251
1252
1253

FIG. 12G

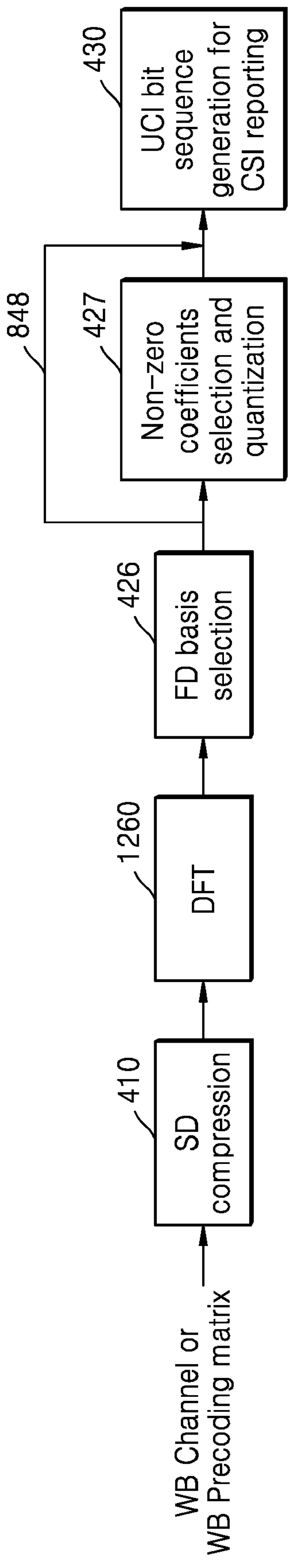
WB Channel or
WB Precoding matrix
410
SD
compression
1260
DFT
426
FD basis
selection
848
427
Non-zero
coefficients
selection and
quantization
430
UCI bit
sequence
generation for
CSI reporting

FIG. 13

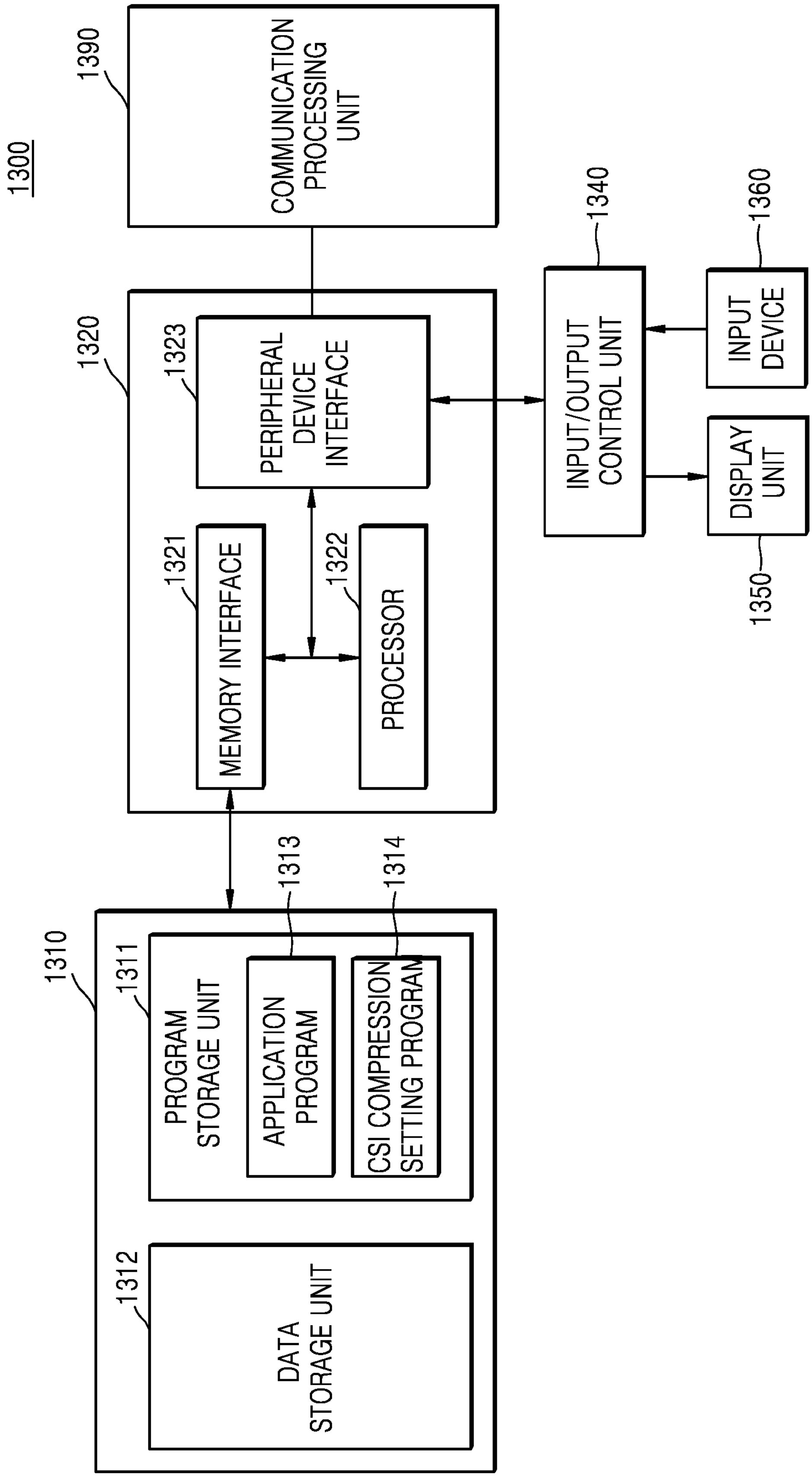
1300
1390
COMMUNICATION PROCESSING UNIT
1320
1323
PERIPHERAL DEVICE INTERFACE
1321
MEMORY INTERFACE
1322
PROCESSOR
1340
INPUT/OUTPUT CONTROL UNIT
1360
INPUT DEVICE
1350
DISPLAY UNIT
1310
1311
PROGRAM STORAGE UNIT
1313
APPLICATION PROGRAM
1314
CSI COMPRESSION SETTING PROGRAM
1312
DATA STORAGE UNIT